(19) **Europäisches Patentamt**
**European Patent Office**
**Office européen des brevets**

(11) **EP 2 956 940 B1**

(12) **EUROPEAN PATENT SPECIFICATION**

(45) Date of publication and mention
of the grant of the patent:
**03.04.2019   Bulletin 2019/14**

(21) Application number: **14705583.4**

(22) Date of filing: **05.02.2014**

(51) Int Cl.:
*G10L 25/78* (2013.01)          *G10L 25/87* (2013.01)
*G10L 15/22* (2006.01)          *G06F 3/16* (2006.01)

(86) International application number:
**PCT/JP2014/000602**

(87) International publication number:
**WO 2014/125791 (21.08.2014 Gazette 2014/34)**

(54) **VOICE RECOGNITION DEVICE, VOICE RECOGNITION METHOD, AND PROGRAM**

SPRACHERKENNUNGSVORRICHTUNG, SPRACHERKENNUNGSVERFAHREN UND
PROGRAMM

DISPOSITIF DE RECONNAISSANCE VOCALE, PROCÉDÉ DE RECONNAISSANCE VOCALE ET
PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.02.2013   JP 2013025501**

(43) Date of publication of application:
**23.12.2015   Bulletin 2015/52**

(73) Proprietor: **Sony Corporation
Tokyo 108-0075 (JP)**

(72) Inventor: **YAMADA, Keiichi
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(56) References cited:
**EP-A2- 1 667 113     US-A1- 2011 257 971
US-B1- 6 351 222**

**Description**

**CROSS REFERENCE TO RELATED APPLICATIONS**

This application claims the benefit of Japanese Priority Patent Application JP 2013-025501, filed on February 13, 2013.

**Technical Field**

The present disclosure relates to a voice recognition device, a voice recognition method, and a program. More specifically, embodiments relate to a voice recognition device, a voice recognition method, and/or a program, which are capable of obtaining a voice section or a voice source direction using voice information and image information and performing voice recognition.

**Background Art**

A voice recognition process is a process of analyzing utterance content of a person acquired by, for example, a microphone. For example, when an information processing apparatus such as a mobile terminal or a television is provided with a voice recognition processing unit, an expression (user utterance) spoken by a user is analyzed, and processing based on the utterance can be performed.

However, an acquisition sound acquired by a microphone includes various kinds of noises (which are called noise, ambient sounds, masking sounds, and the like) as well as the user's voice which is a voice recognition target. It may be more difficult to perform a process of extracting only the specific user's expression from the acquisition sound including noises acquired by the microphone and analyzing the extracted expression as the amount of noise increases. Some existing voice recognition devices difficulties implementing sufficient voice recognition accuracy in noisy environments.

In voice recognition devices that use only sound information acquired by a microphone, it may be difficult to extract a desired sound and properly recognize it when a level of an ambient sound (e.g. the level of noise) is high.

In order to solve this problem, noise reduction techniques may use a beam forming process of selecting only a sound in a specific direction or an echo cancellation process of identifying an acoustic echo and cancelling the acoustic echo have been proposed as well. However, there is also a limit to the noise reduction process, and it is difficult to implement a voice recognition accuracy of a sufficient level through a configuration using such noise reduction techniques.

One technique for solving this problem uses image information as well as an acquisition sound of a microphone. For example, Patent Literature 1 (JP 2012-3326A) discloses a configuration of improving a recognition accuracy in voice recognition by detecting a user's mouth motion (e.g. lip motion) from an image captured by a camera, determining a utterance section uttered by the user based on the lip motion, and/or selecting and analyzing only a microphone acquisition sound in the utterance section.

However, for example, when a motion unrelated to an utterance such as gum chewing is made, there is a problem in that it is difficult to determine an accurate utterance section based on the lip motion.

For example, for devices carried and operated by the user such as mobile terminals. Configurations of operating an input unit of a mobile terminal such as a switch of a touch panel and inputting an utterance start timing and an utterance end timing have also been proposed. Through this process, it is possible to reliably determine only a necessary voice section.

However, the voice section determination process based on the user's operation can be used when the user can directly operate a switch of a terminal while carrying an operable terminal with his/her hand, but there is a problem in that it is difficult to use the process, for example, when the user is apart from the device.

US 6,351,222 B1 discloses an entertainment device configured to receive an initiation command in form of acoustic initiation command and/or a gesture initiation command, to receive a function command in form of an acoustic function command and/or a gesture function command and to perform a predetermined function like raising or lowering a volume of output sounds in response to the function command.

US 2011/0257971 A1 describes a camera-assisted noise cancellation and speech recognition system. The system is configured to receive a voice of a user, to recognize a lip motion of the user and to recognize the voice of the user based on the received voice and an analysis of the recognized lip motion.

**Citation List**

**Patent Literature**

PTL 1: PTL 1: JP 2012-3326 A
PTL 2: PTL 2: JP 2006-72163 A

**Summary**

**Technical Problem**

The present disclosure has been made in light of the above problems, and it is desirable to provide a voice recognition device, a voice recognition method, and/or a program, which are capable of accurately determining a desired utterance section uttered by the user even under the noisy environment and implementing high-accuracy voice recognition.

**Solution to Problem**

According to a first aspect the invention provides an apparatus in accordance with claim 1. According to a second aspect the invention provides a method in accordance with claim 14. According to a third aspect the invention provides a non-transitory computer readable medium in accordance with claim 15. Further aspects of the invention are set forth in the dependent claims, the drawings and the following description of embodiments.

**Advantageous Effects of Invention**

According to embodiments of the present disclosure, by recognizing visual trigger events to determine start points and/or end points of voice data signals and determining whether the voice source direction at the start point and the voice source direction at the end point coincide with each other, the negative effects of noise on voice recognition can be significantly minimized.

**Brief Description of Drawings**

Fig. 1 is a diagram illustrating an example of a concrete environment in which a voice recognition process is performed.
Fig. 2 is a diagram for describing an exemplary configuration of an information input unit including a plurality of microphones and a camera.
Fig. 3 is a diagram for describing an exemplary configuration of a voice recognition device according to an embodiment of the present disclosure.
Fig. 4 is a diagram for describing an exemplary analysis process of a voice source direction using a microphone array.
Fig. 5 is a diagram for describing a detection process of a voice source direction and a voice section.
Fig. 6 is a diagram illustrating a flowchart for describing a general sequence of a voice recognition process using a voice.
Fig. 7 is a diagram for describing a face direction determination process performed by a face direction estimating unit 114 and a line-of-sight direction determination process performed by a line-of-sight direction estimating unit 115.
Fig. 8 is a diagram for describing an utterance section determination example using posture information 123 detected by a posture recognizing unit 119 and gesture information 124 detected by a gesture recognizing unit 120.
Fig. 9 is a diagram for describing an utterance section determination example using the posture information 123 detected by the posture recognizing unit 119 and the gesture information 124 detected by the gesture recognizing unit 120.
Fig. 10 is a diagram for describing an utterance section determination example using the posture information 123 detected by the posture recognizing unit 119 and the gesture information 124 detected by the gesture recognizing unit 120.
Fig. 11 is a diagram for describing a voice section (utterance section) determination process example performed by the voice recognition device according to an embodiment of the present disclosure.
Fig. 12 is a diagram illustrating a flowchart for describing a decision process sequence of a voice source direction and a voice section performed by the voice recognition device according to an embodiment of the present disclosure.

Fig. 13 is a diagram for describing a voice source direction determination process example using an image.

Fig. 14 is a diagram illustrating a flowchart for describing the details of a decision process of a voice source direction and a voice section performed in step S206 in the flow of Fig. 13.

Fig. 15 is a diagram for describing a process of determining whether a face direction or a line-of-sight direction of a user who is estimated as a voice source is within a predetermined range.

Fig. 16 is a diagram for describing a process of determining whether a face direction or a line-of-sight direction of a user who is estimated as a voice source is within a predetermined range.

Fig. 17 is a diagram illustrating a flowchart for describing the details of a decision process of a voice source direction and a voice section performed in step S206 in the flow of Fig. 13.

Fig. 18 is a diagram for describing an embodiment of identifying whether a user is viewing a predetermined specific position and determining an utterance section or the like.

Fig. 19 is a diagram for describing an embodiment of identifying whether a user is viewing a predetermined specific position and determining an utterance section or the like.

Fig. 20 is a diagram illustrating a flowchart for describing an embodiment of identifying whether a user is viewing a predetermined specific position and determining an utterance section or the like.

Fig. 21 is a diagram illustrating a flowchart for describing the details of a decision process of a voice source direction and a voice section performed in step S509 in the flow of Fig. 20.

Fig. 22 is a diagram for describing an exemplary configuration of a voice recognition device that performs a face identification process.

Fig. 23 is a diagram for describing an embodiment in which a cloud type process is performed.

Fig. 24 is a diagram for describing data representing an accuracy rate of voice recognition when a decision process of a voice source direction and a voice section according to various techniques is performed.

## Description of Embodiments

Hereinafter, a voice recognition device, a voice recognition method, and a program will be described in detail with reference to the appended drawings. The details of processing will be described below in connection with the following sections.

1. Outline of configuration and processing of voice recognition device of present disclosure
2. Configuration and processing of voice recognition device according to embodiment of present disclosure
3. Exemplary decision process of voice source direction and voice section
3-1. First exemplary decision process of voice source direction and voice section
3-2. Second exemplary decision process of voice source direction and voice section
4. Embodiment of identifying that user is viewing a specific position and performing processing
5. Configuration of performing face identification process
6. Other embodiments
6-1.Embodiment in which cloud type process is performed
6-2. Embodiment in which voice section detection process is performed based on operation of operating unit
7. Improvement in voice recognition rate using image data
8. Conclusion of configuration of present disclosure

Hereinafter, the description will proceed in connection with the following sections.

(1.Outline of configuration and processing of voice recognition device of present disclosure)

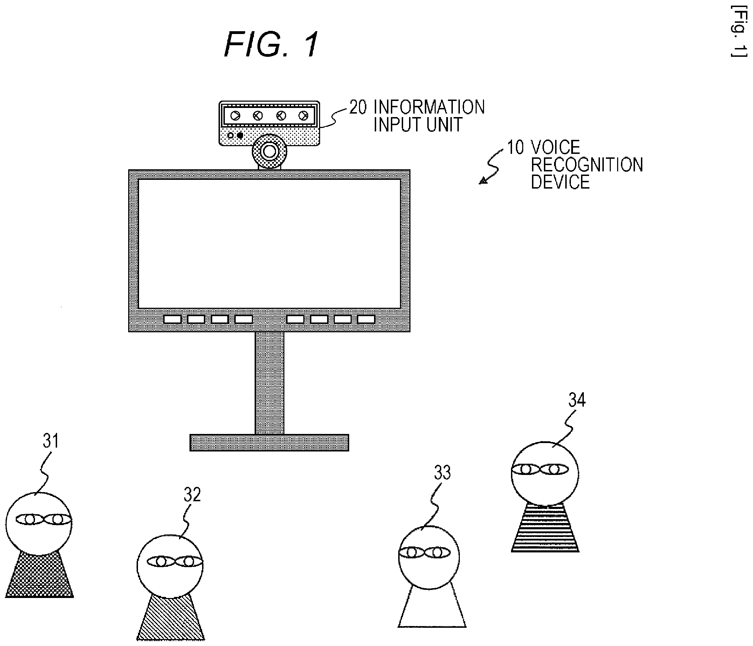

First of all, an outline of a configuration and processing of a voice recognition device according to the present disclosure will be described. Fig. 1 is a diagram illustrating an exemplary use of the voice recognition device according to the present disclosure. The voice recognition device according to the present disclosure can be assembled in various devices for use. Specifically, for example, the voice recognition device can be implemented as various devices such as a television, a mobile terminal, and a DVD player. As illustrated in Fig. 1, a voice recognition device 10 is a television and is equipped with a voice recognition processing unit that executes voice recognition in the television.

As illustrated in Fig. 1, the voice recognition device 10 includes an information input unit 20. The information input unit 20 includes a microphone array composed of a plurality of microphones serving as a voice input unit, and a camera (imaging unit) that serves as an image input unit and captures a moving image.

As illustrated in Fig. 1, users 31 to 34 which are television viewers are in front of the television which is the voice recognition device 10. The users make various processing requests to the television through utterance. For example, when the user 31 gives an utterance "change a channel to a channel 4" to the television, the voice recognition device 10 serving as the television analyzes the user 31's utterance, and outputs analysis information to a control unit that controls the television, and then a television channel change process is performed under control of the control unit.

The voice recognition device 10 selects a target sound using information input to the information input unit 20 configured with the microphones and the camera, and performs sound analysis. Here, a sound acquired by the microphones of the information input unit 20 includes various noises (ambient sounds) as well as a target sound which is a voice recognition target. The voice recognition device 10 selects the target sound from the sound including the noises acquired by the microphones, performs analysis of the target sound, that is, voice recognition, and acquires utterance content.

In order to extract the target sound which is the voice recognition target from an observed sound signal with various noises, a process of determining a voice source direction and a voice section of the target sound is consequential. This process is performed using image information or voice information input through the information input unit 20.

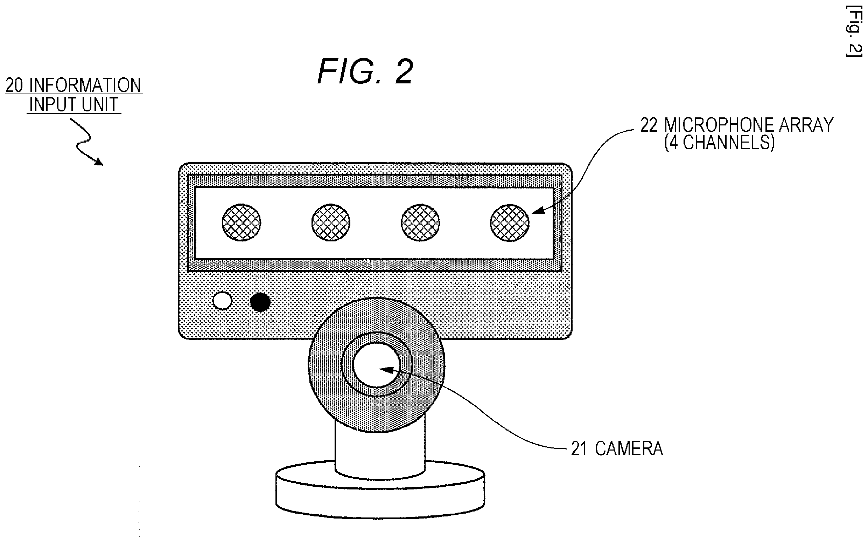

Fig. 2 illustrates an exemplary configuration of the information input unit 20. As illustrated in Fig. 2, the information input unit 20 includes a camera 21 serving as an imaging unit that acquires image information and a microphone array 22 composed of a plurality of microphones arranged in a horizontal direction.

Each of the microphones configuring the microphone array 22 acquires a sound having a phase difference according to a voice source direction of an acquisition sound. A voice processing unit of the voice recognition device 10 analyzes the phase differences of the acquisition sounds of the respective microphones, and analyzes the voice source direction of the respective sounds.

For example, the camera 21 is a video camera and acquires an image of a scene in front the television. An image processing unit of the voice recognition device 10 analyzes an acquisition image, identifies a human region or a face region included in the image, analyzes a change in motion or shape of a human hand and a lip image which is a motion of a mouth region, and acquires information to be used for voice recognition.

(2. Configuration and processing of voice recognition device according to embodiment of present disclosure)

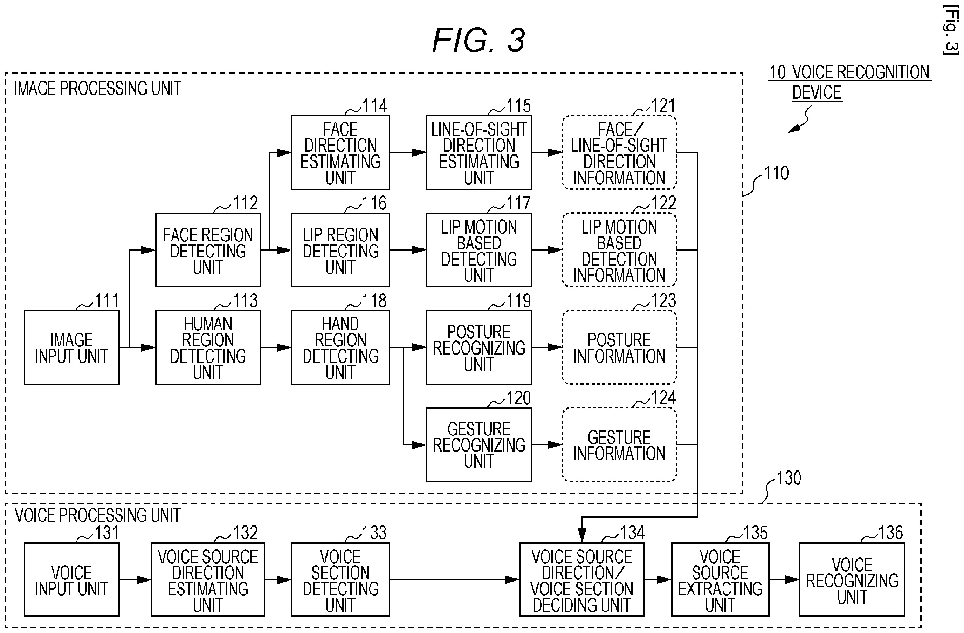

Next, a configuration and processing of the voice recognition device according to the embodiment of present disclosure will be described with reference to Fig. 3. Fig. 3 is a block diagram illustrating an exemplary configuration of the voice recognition device 10 according to the present disclosure. As illustrated in Fig. 3, the voice recognition device 10 includes an image processing unit 110 and a voice processing unit 130.

An image input unit 111 of the image processing unit 110 illustrated in Fig. 3 is the camera 21 of the information input unit 10 illustrated in Fig. 2 or an input unit that receives an image captured by the camera 21. Here, the input image is a moving image. A voice input unit 131 of the voice processing unit 130 illustrated in Fig. 3 is the microphone array 22 of the information input unit 10 illustrated in Fig. 2 or an input unit that receives the acquisition sounds of the microphones from each of the microphones configuring the microphone array 22.

The acquisition sounds of the voice input unit 131 of the voice processing unit 130 are the acquisition sounds of the plurality of microphones arranged at a plurality of different positions. A voice source direction estimating unit 132 estimates the voice source direction based on the acquisition sounds of the plurality of microphones.

As described above with reference to Fig. 2, each of the microphones configuring the microphone array 22 acquires a sound with a phase difference according to a voice source direction of an acquisition sound. The voice source direction estimating unit 132 estimates the voice source direction based on a plurality of sound signals having a phase difference acquired by the plurality of microphones.

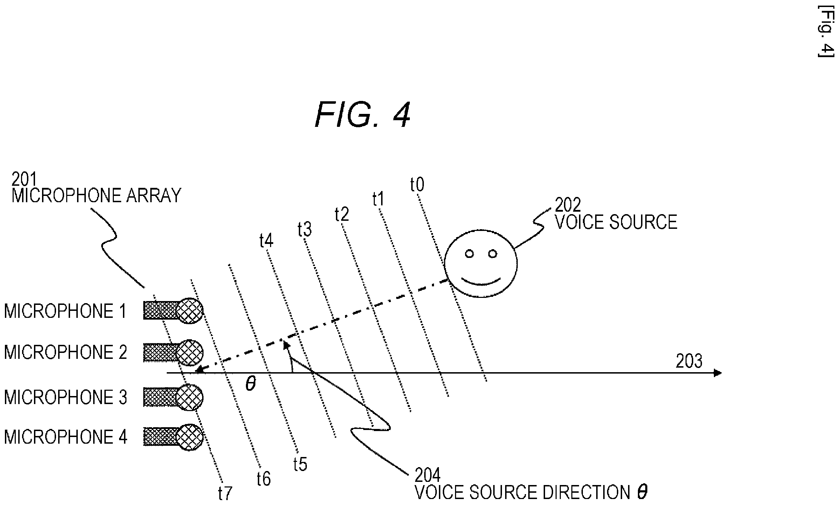

For example, a microphone array 201 including a plurality of microphones 1 to 4 arranged at different positions acquires a sound from a voice source 202 positioned in a specific direction as illustrated in Fig. 4. Arrival times at which the sound from the voice source 202 arrives at the respective microphones of the microphone array 201 slightly deviate from one another. In the example of Fig. 4, the sound arrives at the microphone 1 at a time t6 but arrives at the microphone 4 at a time t7.

As described above, each microphone acquires a sound signal having a phase difference according to a voice source direction. The phase difference differs according to the voice source direction, and the voice source direction can be obtained by analyzing the phase differences of the sound signals acquired by the respective microphones. The voice source direction analysis process is disclosed, for example, in Patent Literature 2 (JP 2006-72163 A).

In the present embodiment, the voice source direction is assumed to be represented by an angle q from a vertical line 203 vertical to a microphone arrangement direction of the microphone array as illustrated in Fig. 4. In other words, the angle q from the vertical direction line 203 illustrated in Fig. 4 is used as a voice source direction q 204.

The voice source direction estimating unit 132 of the voice processing unit 130 estimates the voice source direction based on the acquisition sounds which are acquired by the plurality of microphones arranged at a plurality of different positions and input through the voice input unit 131 that receives the sounds from the microphone array as described above.

A voice section detecting unit 133 of the voice processing unit 130 illustrated in Fig. 3 determines a voice start time and a voice end time of a voice from the specific voice source direction estimated by the voice source direction estimating unit 132. For this process, performed is a process of giving a delay according to a phase difference to each of input sounds with a phase difference which are input in the specific voice source direction and acquired through the plurality of microphones configuring the microphone array, lining up phases of the acquisition sounds of the respective microphones, and obtaining the sum of the respective observed signals.

Through this process, an enhancement process of the target sound is performed. In other words, through the observed signal summation process, only a sound in the specific voice source direction can be enhanced while reducing the sound level of the remaining ambient sounds.

The voice section detecting unit 133 performs a voice section determination process of determining a rising position of the sound level as a voice section start time and a falling position of the sound level as a voice section end time using the addition signal of the observed signals of the plurality of microphones as described above.

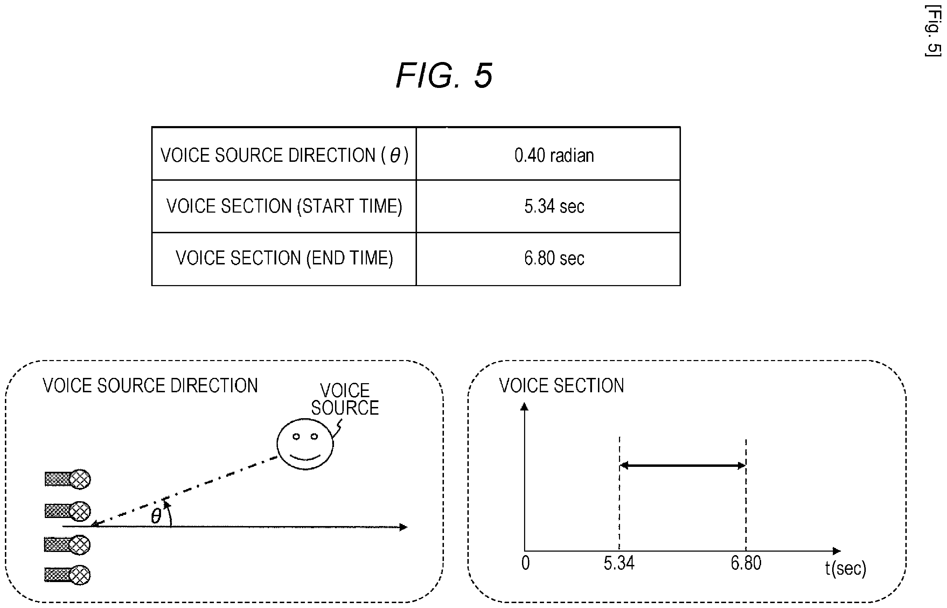

Through the processes of the voice source direction estimating unit 132 and the voice section detecting unit 133 of the voice processing unit 130, for example, analyzed data illustrated in Fig. 5 can be acquired. The analyzed data illustrated in Fig. 5 is as follows.

> Voice source direction = 0.40 radian
> Voice section (start time) = 5.34 sec
> Voice section (end time) = 6.80 sec

The voice source direction (q) is an angle (q) from the vertical line to the microphone arrangement direction of the microphone array as described above with reference to Fig. 5. The voice section is information representing a start time and an end time of an utterance section of a voice from the voice source direction. In the example illustrated in Fig. 5, a voice start time representing an utterance start is 5.34 sec, and a voice end time representing an utterance end is 6.80 sec. Here, a measurement start time is set to 0.

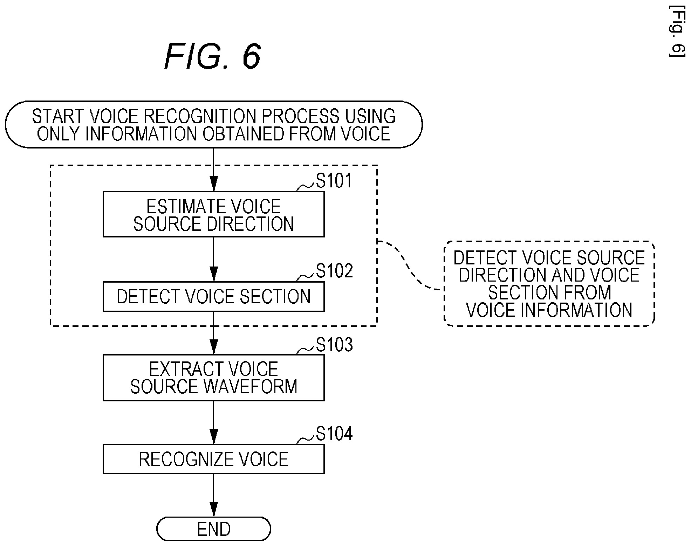

The voice recognition process using only the sound signal has been used in the past. In other words, the system that executes the voice recognition process using only the voice processing unit 130 without using the image processing unit 110 illustrated in Fig. 3 has been used in the past. Before a description of the voice recognition process using the image processing unit 110 which is one of features in the configuration of the present disclosure, a general voice recognition process sequence using only the voice processing unit 130 will be first described with reference to a flowchart of Fig. 6.

First of all, in step S101, the voice source direction is estimated. This process is executed in the voice source direction estimating unit 132 illustrated in Fig. 3, for example, according to the process described above with reference to Fig. 4.

Next, in step S102, the voice section is detected. This process is executed by the voice section detecting unit 133 illustrated in Fig. 3. As described above, the voice section detecting unit 133 gives a delay according to a phase difference to each of input sounds with a phase difference which are input in the specific voice source direction and acquired through the plurality of microphones configuring the microphone array, lines up phases of the acquisition sounds of the respective microphones, and obtains the sum of the respective observed signals. Through this process, the voice section determination process of acquiring an enhanced signal of the target sound and determining the rising position of the sound level of the enhanced signal and the falling position of the sound level thereof as the voice section start time and the voice section end time is performed.

Next, in step S103, a voice source waveform is extracted. This process is performed by a voice source extracting unit 135 illustrated in Fig. 3. The flow illustrated in Fig. 6 is an example in which processing of the voice recognition process using only a voice is performed, but processing of a voice source direction/voice section deciding unit 134 using an input signal from the image processing unit 110 illustrated in Fig. 3 is not performed.

In the process using only the sound signal, the voice source extracting unit 135 of the voice processing unit 130 illustrated in Fig. 3 performs the voice source extraction process using only the voice source direction estimated by the voice source direction estimating unit 132 of the voice processing unit 130 illustrated in Fig. 3 and the voice section information detected by the voice section detecting unit 133.

The voice source extracting unit 135 performs the voice source waveform extraction process of step S103 illustrated in Fig. 6. The voice source waveform is used in the process of setting a sound signal selected based on the voice source direction estimated by the voice source direction estimating unit 132 and the voice section information detected by the voice section detecting unit 133 as an analysis target and analyzing a change in the frequency level or the like, and this process has been performed in the voice recognition process in the past.

Next, in step S104, the voice recognition process is performed. This process is performed by a voice recognizing unit 135 illustrated in Fig. 3. The voice recognizing unit 135 includes dictionary data in which frequency change patterns in various utterances which are registered in advance are registered. The voice recognizing unit 135 compares the frequency change pattern of the acquisition sound obtained by analysis based on the acquisition sound by the voice source extracting unit 135 with the dictionary data using the dictionary data, and selects dictionary registration data having a high degree of coincidence. The voice recognizing unit 136 determines an expression registered to the selected dictionary data as utterance content.

A sequence of performing voice recognition using only a sound acquired using a microphone is almost the same as the process according to the flow illustrated in Fig. 6. However, in the process using only a sound, there is a limitation to determination of the voice source direction and the analysis accuracy of the voice section. Particularly, when a level of a noise (ambient sound) other than a target sound is high, the determination accuracy of the voice source direction and the voice section is lowered, and as a result, there is a problem in that it is difficult to perform the sufficient voice recognition process.

In order to solve this problem, in the configuration of the present disclosure, the image processing unit 110 is provided, and information acquired in the image processing unit 110 is output to the voice source direction/voice section deciding unit 134 of the voice processing unit 130 as illustrated in Fig. 3.

The voice source direction/voice section deciding unit 134 performs the process of deciding the voice source direction and the voice section using analysis information of the image processing unit 110 in addition to the voice source direction information estimated by the voice source direction estimating unit 132 of the voice processing unit 130 and the voice section information detected by the voice section detecting unit 133. As described above, the voice recognition device according to the present disclosure decides the voice source direction and the voice section using the image analysis result as well as the sound, and thus the voice source direction and the voice section can be determined with a high degree of accuracy, and as a result, high-accuracy voice recognition can be implemented.

Next, the voice recognition process using the image processing unit 110 of the voice recognition device illustrated in Fig. 3 will be described.

In the image processing unit 110 of the voice recognition device according to the present disclosure, an image acquired by the camera 21 which is the imaging unit of the information input unit 20 described above with reference to Fig. 2 is input to the image input unit 111 illustrated in Fig. 3, and the input image is input to a face region detecting unit 112 and a human region detecting unit 113. The camera 21 captures a moving image, and sequentially outputs image frames which are consecutively captured.

The face region detecting unit 112 illustrated in Fig. 3 detects a face region of a person from each of the image frames of the input image. The human region detecting unit 113 detects a human region from each of the image frames of the input image. The region detection process can be performed using an existing technique.

For example, the face region detecting unit 112 holds face pattern information which is composed of shape data and brightness data and represents a feature of a face which is registered in advance. The face region detecting unit 112 performs a process of detecting a region similar to a registered pattern from an image region in an image frame using the face pattern information as reference information, and detects a face region in an image. Similarly, the human region detecting unit 113 performs a process of detecting a region similar to a registered pattern from an image region in an image frame using a human pattern which is composed of shape data and brightness data and represents a feature of a human which is registered in advance as reference information, and detects a human region in an image. In the human region detection process performed by the human region detecting unit 113, only an upper body region of a human may be detected.

The face region detection information of the face region detecting unit 112 is input to a face direction estimating unit 114 and a lip region detecting unit 116 together with image information of each image frame. The face direction estimating unit 114 determines a direction in which a face included in the face region in the image frame detected by the face region detecting unit 112 looks with respect to the camera 21 of the information input unit 20 illustrated in Fig. 2.

The face direction estimating unit 114 determines positions of respective parts of the face such as an eye position and a mouth position from the face region detected by the face region detecting unit 112, and estimates a direction toward which the face looks based on a positional relation of the face parts. Further, the face direction estimation information estimated by the face direction estimating unit 114 is output to a line-of-sight direction estimating unit 115. The line-of-sight direction estimating unit 115 estimates the line-of-sight direction of the face included in the face region based on the face direction estimation information estimated by the face direction estimating unit 114.

Face/line-of-sight direction information 121 including at least one information of the face direction information estimated by the face direction estimating unit 114 and the line-of-sight direction information estimated by the line-of-sight direction estimating unit 115 is output to the voice source direction/voice section deciding unit 134.

Here, the line-of-sight direction estimating unit 115 may be omitted, and only the face direction information may be generated and output to the voice source direction/ voice section deciding unit 134. Alternatively, only the line-of-sight direction information generated by the line-of-sight direction estimating unit 115 may be output to the voice source direction/voice section deciding unit 134.

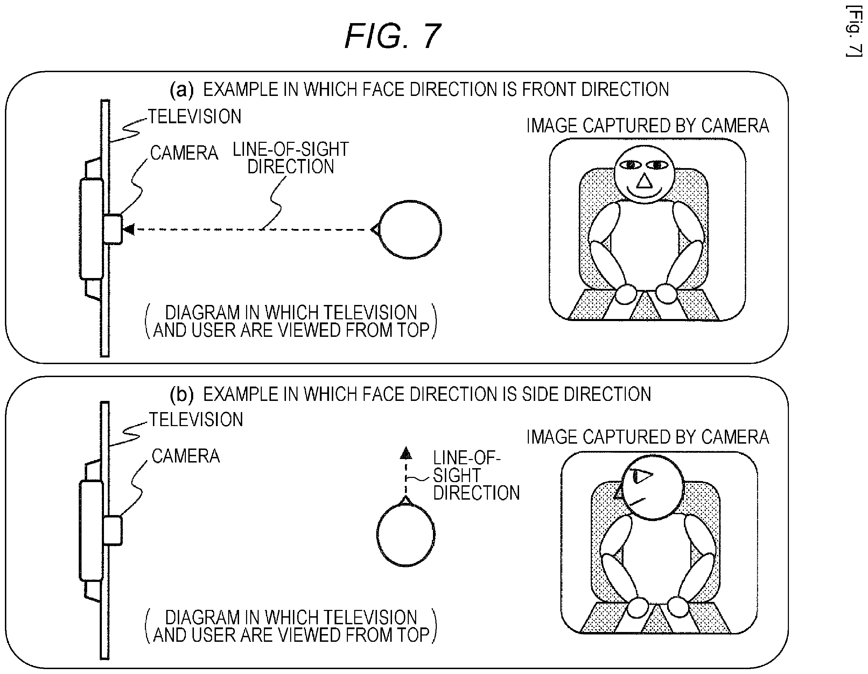

An exemplary face direction determination process performed by the face direction estimating unit 114 and an exemplary line-of-sight direction determination process performed by the line-of-sight direction estimating unit 115 will be described with reference to Fig. 7. Fig. 7 illustrates two examples of an example (a) of determining that the face direction and the line-of-sight direction are the front direction with respect to the camera and an example (b) of determining that the face direction and the line-of-sight direction are the side direction with respect to the camera.

The face direction estimating unit 114 and the line-of-sight direction estimating unit 115 determine a direction of the face based on the positional relation of the face parts included in the face region, and determine that a direction in which the face looks is the line-of-sight direction as illustrated in Fig. 7. The face/line-of-sight direction information 121 including at least one piece of information of the face direction or the line-of-sight direction generated through the determination processes is output the voice source direction/voice section deciding unit 134.

The lip region detecting unit 116 detects a region of a mouth, that is, a lip region of the face included in the face region in each image frame detected by the face region detecting unit 112. For example, the lip region detecting unit 116 detects a region similar to a registered pattern as a lip region from the face region in the image frame detected by the face region detecting unit 112 using a lip shape pattern which is registered to a memory in advance as reference information.

The lip region information detected by the lip region detecting unit 116 is output to a lip motion based detecting unit 117. The lip motion based detecting unit 117 estimates the utterance section based on a motion of the lip region. In other words, a time (voice section start time) at which an utterance started and a time (voice section end time) at which an utterance ended are determined based on the mouth motion. The determination information is output to the voice source direction/voice section deciding unit 134 as lip motion based detection information 122.

The utterance section analysis process based on a lip motion is disclosed, for example, in JP 2012-3326 A, and the lip motion based detecting unit 117 performs the process disclosed, for example, in JP 2012-3326 A and determines the utterance section.

A hand region detecting unit 118 detects a region of a hand included in the human region in the image frame detected by the human region detecting unit 113. The utterer is notified of actions of a hand that have to be taken at the time of an utterance start or at the time of an utterance end in advance. For example, a setting may be made so that "paper" in the rock-paper-scissors game can be shown when an utterance starts. A setting may be made so that "rock" can be shown when an utterance ends. The hand region detecting unit 118 determines whether the shape of the hand representing an utterance start or an utterance end has been detected according to the setting information.

For example, the hand region detecting unit 118 detects a region similar to a registered pattern as a hand region from the human region in the image frame detected by the human region detecting unit 113 using a hand shape pattern which is registered to a memory in advance as reference information.

The hand region information detected by the hand region detecting unit 118 is output to a posture recognizing unit 119 and a gesture recognizing unit 120. The posture recognizing unit 119 analyzes postures of the hand regions in the consecutive image frames detected by the hand region detecting unit 118, and determines whether the posture of the hand which is registered in advance has been detected.

Specifically, for example, when registered posture information of "paper" in the rock-paper-scissors game is set as registered posture information, the posture recognizing unit 119 performs a process of detecting a posture of "paper" shown by the hand included in the hand region. The detection information is output to the voice source direction/voice section deciding unit 134 as posture information 123. The registration information is registration information of which the user is notified in advance, and the user takes the registered posture when giving an utterance.

For example, concrete setting examples of the registered posture information are as follows:

(1) showing "paper" when starting an utterance section;
(2) showing "paper" when starting an utterance section, and close "paper" and show "rock" when finishing an utterance section; and
(3) showing "paper" at any point in time of an utterance section.

For example, one of the posture information (1) to (3) is registered as the registration information, and a notification thereof is given to the user. The user takes a predetermined action at an utterance timing according to the registration information. The voice recognition device can detect the utterance section according to the action.

Meanwhile, the gesture recognizing unit 120 analyzes motions (gestures) of the hand regions in the consecutive image frames detected by the hand region detecting unit 118, and determines whether the motion (gesture) of the hand which is registered in advance has been detected.

Here, the posture represents a posture of the hand, and the gesture represents a motion of the hand. Specifically, for example, when motion (gesture) information of a motion of raising the hand is set as registered gesture information, the gesture recognizing unit 120 performs a process of analyzing the hand regions in the consecutive image frames and detecting a motion (gesture) of raising the hand This detection information is output to the voice source direction/voice section deciding unit 134 as gesture information 124. The registration information is registration information of which the user is notified in advance, and the user takes the registered motion (gesture) when giving an utterance.

For example, concrete setting examples of the registered posture information are as follows:

(1) raising the hand when starting an utterance section;
(2) raising the hand when starting an utterance section and lower the hand when finishing an utterance section; and
(3) raising the hand at any point in time of an utterance section.

For example, one of the motion (gesture) information (1) to (3) is registered as the registration information, and a notification thereof is given to the user. The user takes a predetermined action at an utterance timing according to the registration information. The voice recognition device can detect the utterance section according to the action.

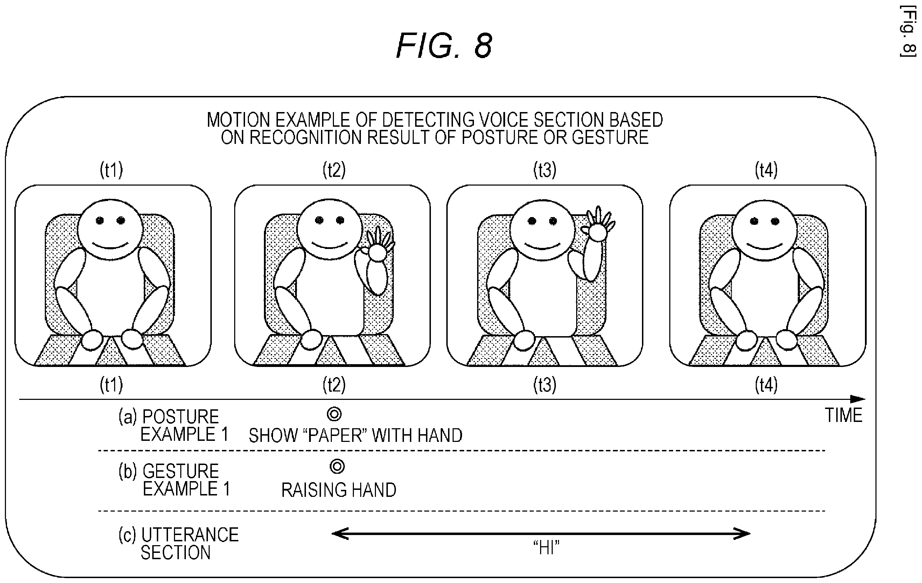

An utterance section determination example using the posture information 123 detected by the posture recognizing unit 119 and the gesture information 124 detected by the gesture recognizing unit 120 will be described with reference to Figs. 8 to 10.

Fig. 8 illustrates image which are continuously captured at times (t1) to (t4) by the camera 21 of the information input unit 20. States of the users in the respective images are as follows:

(t1) (rock) state in which the hand is lowered and closed;
(t2) (paper) state in which the hand is raised and opened;
(t3) (paper) state in which the hand is raised and opened; and
(t4) (rock) state in which the hand is lowered and closed.

In other words, the user takes a motion of raising and opening the hand (paper) and then lowering and closing the hand (rock) again from the (rock) state in which the hand is lowered and closed. An utterance is given during this motion period of time. In the example illustrated in Fig. 8,

utterance start time = t2,
utterance end time = t4, and
the utterance section corresponds to a section between t2 and t4.

The example illustrated in Fig. 8 is an example of the above setting in which a setting of the registered posture information registered to the memory of the voice recognition device is:

(1) showing "paper" when starting an utterance section.

The posture recognizing unit 119 outputs the time (t2) at which "paper" is detected in the user's hand to the voice source direction/voice section deciding unit 134 as the posture information 123.

Further, the example illustrated in Fig. 8 is an example of the above setting in which a setting of the registered motion (gesture) information registered to the memory of the voice recognition device is:

(1) raising the hand when starting an utterance section.

The gesture recognizing unit 120 outputs the time (t2) at which the user's raised hand is detected to the voice source direction/voice section deciding unit 134 as the gesture information 124.

The voice source direction/voice section deciding unit 134 can identify the time (t2) as the utterance start time based on the posture information 123 or the gesture information.

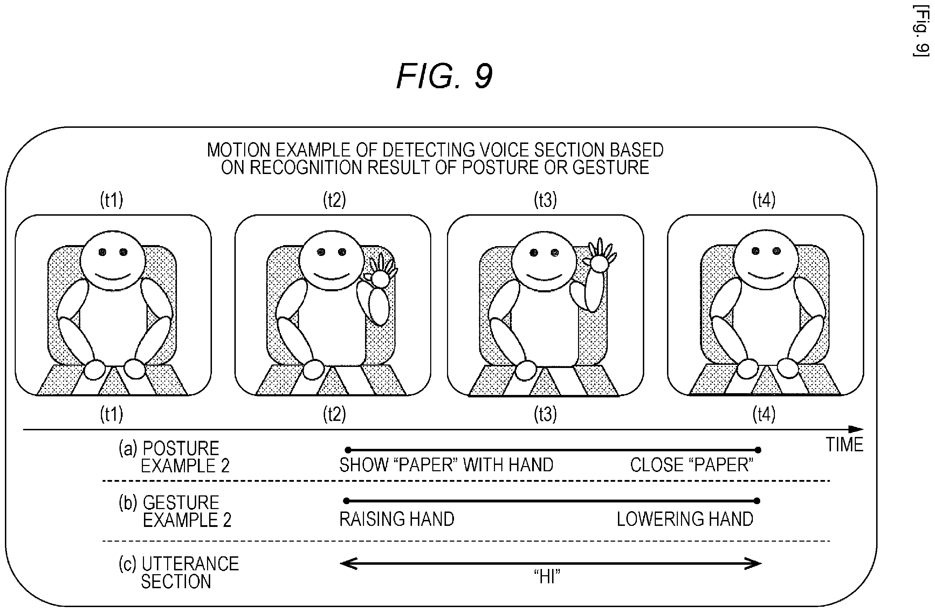

Fig. 9 illustrates image which are continuously captured at times (t1) to (t4), similarly to Fig. 8. States of the users in the respective images are as follows:

(t1) (rock) state in which the hand is lowered and closed;
(t2) (paper) state in which the hand is raised and opened;
(t3) (paper) state in which the hand is raised and opened; and
(t4) (rock) state in which the hand is lowered and closed.

In other words, the user takes a motion of raising and opening the hand (paper) and then lowering and closing the hand (rock) again from the (rock) state in which the hand is lowered and closed. An utterance is given during this motion period of time.

In the example illustrated in Fig. 9, similarly to the example illustrated in Fig. 8,

utterance start time = t2,

utterance end time = t4, and

the utterance section corresponds to a section between t2 and t4.

The example illustrated in Fig. 9 is an example of the above setting in which a setting of the registered posture information registered to the memory of the voice recognition device is:

(2) showing "paper" when starting an utterance section and close "paper" when finishing an utterance section.

The posture recognizing unit 119 outputs the time (t2) at which "paper" is detected and the time (t4) at which "paper" is closed in the user's hand to the voice source direction/voice section deciding unit 134 as the posture information 123.

Further, the example illustrated in Fig. 9 is an example of the above setting in which a setting of the registered motion (gesture) information registered to the memory of the voice recognition device is:

(2) raising the hand when starting an utterance section and lowering the hand when finishing at utterance section.

The gesture recognizing unit 120 outputs the time (t2) at which the user's hand is raised and the time (t4) at which the user's hand is lowered to the voice source direction/voice section deciding unit 134 as the gesture information 124.

The voice source direction/voice section deciding unit 134 can identify the time (t2) as the utterance start time and the time (t4) as the utterance end time based on the posture information 123 or the gesture information.

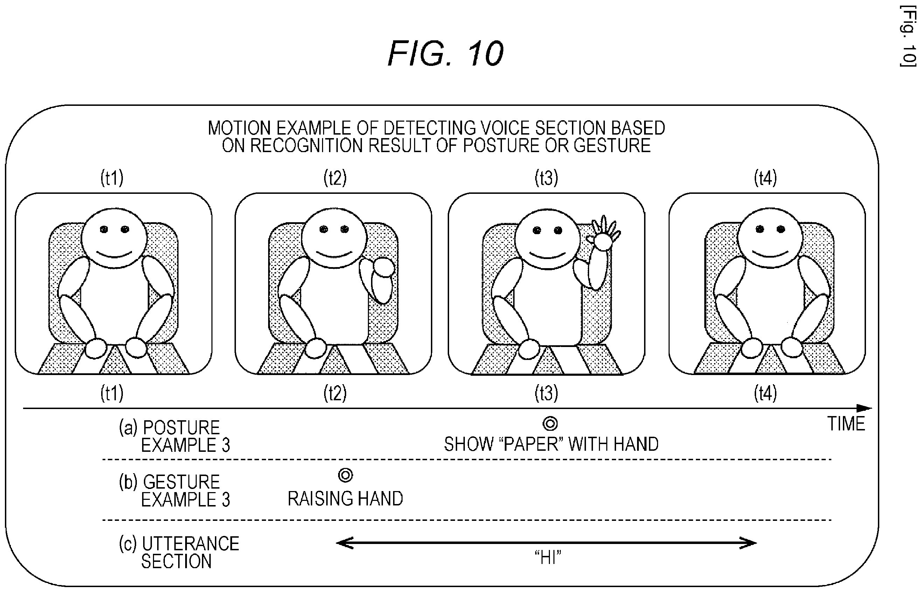

Fig. 10 illustrates image which are continuously captured at times (t1) to (t4), similarly to Figs. 8 and 9. States of the users in the respective images are as follows:

(t1) (rock) state in which the hand is lowered and closed;

(t2) (rock) state in which the hand is raised and closed;

(t3) (paper) state in which the hand is raised and opened; and

(t4) (rock) state in which the hand is lowered and closed.

In other words, the user takes a motion of raising and opening the hand (paper) and then lowering and closing the hand (rock) again from the (rock) state in which the hand is lowered and closed. An utterance is given during this motion period of time.

In the example illustrated in Fig. 10, similarly to the example illustrated in Figs. 8 and 9,

utterance start time = t2,

utterance end time = t4, and

the utterance section corresponds to a section between t2 and t4.

The example illustrated in Fig. 10 is an example of the above setting in which a setting of the registered posture information registered to the memory of the voice recognition device is:

(2) showing "paper" at any point in time of an utterance section.

The posture recognizing unit 119 outputs the time (t3) at which "paper" is detected in the user's hand to the voice source direction/voice section deciding unit 134 as the posture information 123.

Further, the example illustrated in Fig. 10 is an example of the above setting in which a setting of the registered motion (gesture) information registered to the memory of the voice recognition device is:

(2) raising the hand at any point in time of an utterance section.

The gesture recognizing unit 120 outputs the time (t2) at which the user's hand is raised and the time (t4) at which the user's hand is lowered to the voice source direction/voice section deciding unit 134 as the gesture information 124.

The voice source direction/voice section deciding unit 134 can identify the time (t2) a time within the utterance section based on the posture information 123 or the gesture information.

One of features of the process performed by the voice recognition device according to the present disclosure lies in that a plurality of different pieces of information can be used in the voice section (utterance section) determination process, and the start position (time) of the voice section and the end position (time) of the voice section are determined based on different pieces of information.

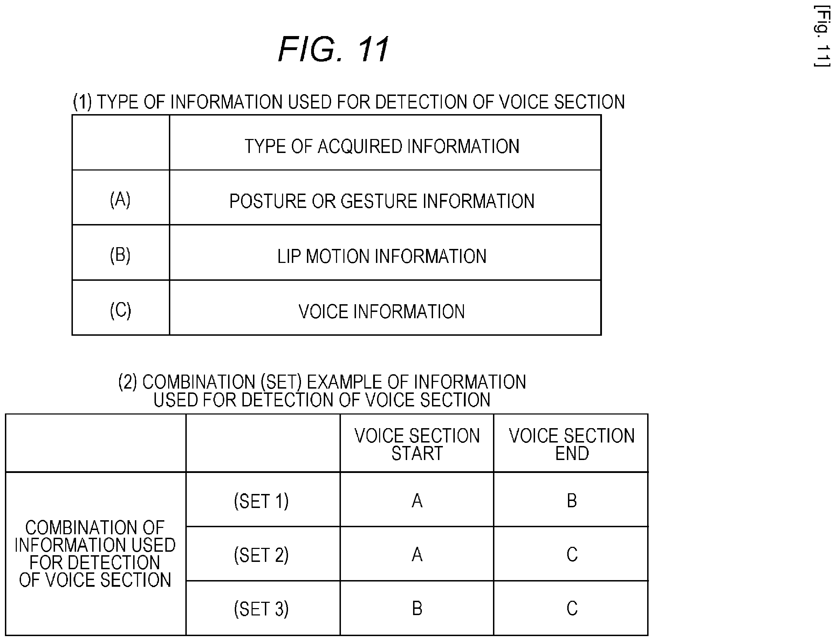

An example of the voice section (utterance section) determination process performed by the voice recognition device according to the present disclosure will be described with reference to Fig. 11. Fig. 11 illustrates a type of information acquired for the voice section detection process by the voice recognition device according to the present disclosure and an exemplary use of respective information. In other words, tables of (1) type of information used for voice section detection and (2) combination example of information used in voice section detection are illustrated. Here, the voice section detection process is performed in the voice source direction/voice section deciding unit 134 illustrated in Fig. 3.

As illustrated in (1) type of information used for voice section detection of Fig. 11, the voice recognition device according to the present disclosure has a configuration capable of using the following information as information used for voice section detection:

(A) the posture or gesture information;
(B) the lip motion information; and
(C) the voice information.

The voice source direction/voice section deciding unit 134 of the voice processing unit 130 illustrated in Fig. 3 decides the voice section selectively using the respective pieces of information.

(A) The posture or gesture information is information corresponding to the posture information 123 generated by the posture recognizing unit 119 of the image processing unit 110 in the device configuration illustrated in Fig. 3 and the gesture information 124 generated by the gesture recognizing unit 120.
(B) The lip motion information is information corresponding to the lip motion based detection information 122 generated by the lip motion based detecting unit 117 of the image processing unit 110 illustrated in Fig. 3.
(C) The voice information is information corresponding to the voice section information generated by the voice section detecting unit 133 of the voice processing unit 130 illustrated in Fig. 3.

The voice source direction/voice section deciding unit 134 of the voice processing unit 130 illustrated in Fig. 3 decides the voice section selectively using the respective pieces of information. A concrete information use example is (2) combination example of information used for voice section detection of Fig. 11. Specifically, for example, the voice section detection is performed using the following information combinations.

(Set 1)

(A) The posture or gesture information is used for determination of the voice section start position (time), and (B) the lip motion information is used for determination of the voice section end position (time).

(Set 2)

(A) the posture or gesture information is used for determination of the voice section start position (time), and (C) the voice information is used for determination of the voice section end position (time).

(Set 3)

(B) the lip motion information is used for determination of the voice section start position (time), and (C) the voice information is used for determination of the voice section end position (time).

As described above, the voice recognition device according to the present disclosure uses different pieces of information for determination of the voice section start position and determination of the voice section end position. The example illustrated in (2) of Fig. 11 is exemplary, and any other combination is possible and, for example, a plurality of pieces of information may be used for determination of the start position or the end position of the voice section. For example, a setting in which various pieces of information are combined may be made such as a setting in which two pieces of information of (A) the posture or gesture information and (C) the voice information are used for determination of the voice section start position, and two pieces of information of (B) the lip motion information and (C) the voice information are used for determination of the voice section end position.

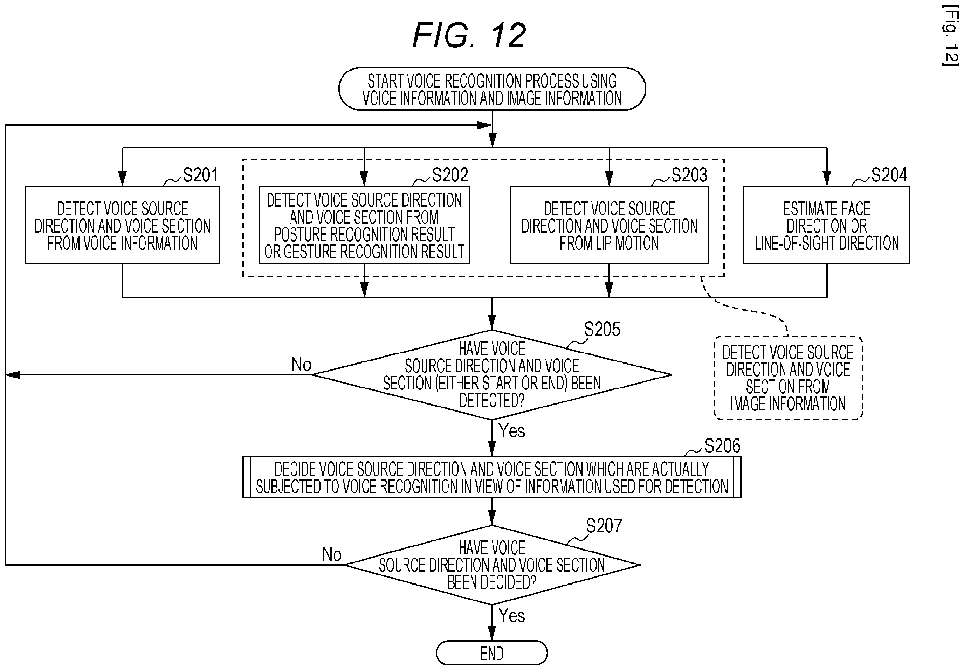

Next, the decision process sequence of the voice source direction and the voice section performed by the voice recognition device according to the present disclosure will be described with reference to a flowchart illustrated in Fig. 12. The process illustrated in Fig. 12 is performed by the voice recognition device including the image processing unit 110 and the voice processing unit 130 illustrated in Fig. 3. For example, this process may be performed such that a program recording a processing sequence according to the flow of Fig. 12 is read from a memory and executed under control of a data processing unit including a CPU having a program execution function or the like.

The process of respective steps in the processing flow illustrated in Fig. 12 will be sequentially described.

(Step S201)

First of all, in step S201, the detection process of the voice source direction and the voice section is performed based on the voice information. This process is performed by the voice source direction estimating unit 132 and the voice section detecting unit 133 of the voice processing unit 130 illustrated in Fig. 3. This process corresponds to the detection process of the voice source direction and the voice section based on only a sound described above with reference to Figs. 4 to 6.

(Step S202)

In step S202, the detection process of the voice source direction and the voice section is performed based on a posture recognition result or a gesture recognition result. This process is a process in which the voice source direction/voice section deciding unit 134 detects the voice source direction and the voice section based on the posture information 123 generated by the posture recognizing unit 119 of the image processing unit 110 illustrated in Fig. 3 or the gesture information 124 generated by the gesture recognizing unit 120 thereof. This process corresponds to the detection process of the voice source direction and the voice section using the posture information or the gesture information described above with reference to Figs. 8 to 10.

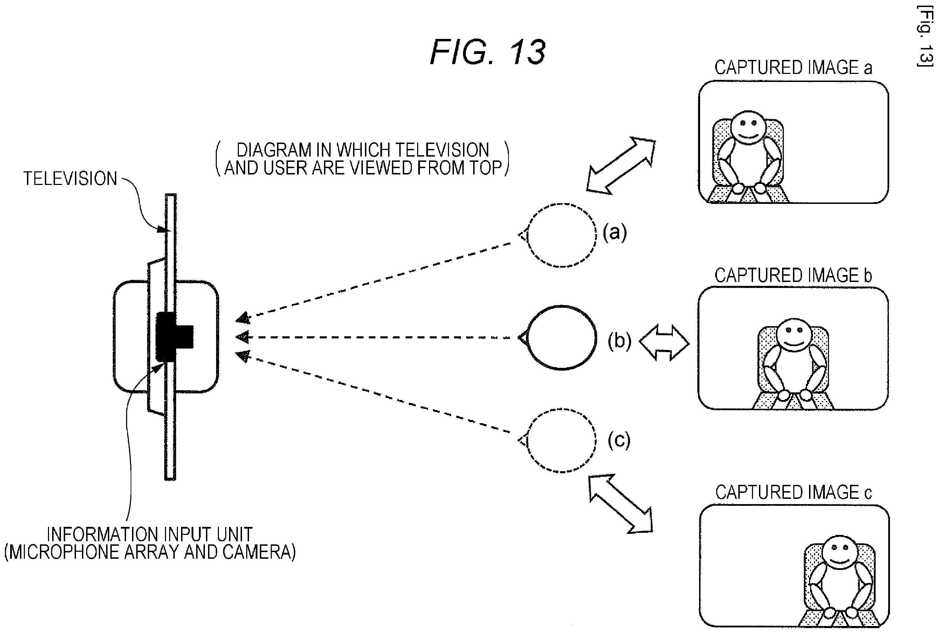

The voice source direction is decided based on the user's image position at which the posture or the gesture has been detected. An exemplary voice source direction determination process using this image will be described with reference to Fig. 13. Fig. 13 illustrate images captured by the camera of the information input unit, that is, captured images a to c when the users are positioned at three different positions (a) to (c) with respect to the television equipped with the voice recognition device. The users shown in the captured images a to c are users whose posture or gesture has been detected.

When the user is positioned at the position of (a) illustrated in Fig. 13, that is, at the left position when viewed from the television, the user is output at the left side of the captured image a as shown in the captured image a. When the user is detected at the left side in the image as in the captured image a, the voice source direction can be determined as the front left direction of the television (the voice recognition device). As described above, the voice source direction/voice section deciding unit 134 acquires the captured image, and determines the voice source direction based on the user display position in the captured image. Here, the user is a user whose posture or gesture has been detected.

When the user is positioned at the position of (b) illustrated in Fig. 13, that is, at the central position when viewed from the television, the user is output at the center of the captured image b as shown in the captured image b. When the user is detected at the center in the image as in the captured image b, the voice source direction can be determined as the front direction of the television (the voice recognition device). As described above, the voice source direction/voice section deciding unit 134 acquires the captured image, and determines the voice source direction based on the user display position in the captured image. Here, the user is a user whose posture or gesture has been detected.

Further, when the user is positioned at the position of (c) illustrated in Fig. 13, that is, at the right position when viewed from the television, the user is output at the right side of the captured image c as shown in the captured image c. When the user is detected at the right side in the image as in the captured image c, the voice source direction can be determined as the front right direction of the television (the voice recognition device). As described above, the voice source direction/voice section deciding unit 134 acquires the captured image, and determines the voice source direction based on the user display position in the captured image. Here, the user is a user whose posture or gesture has been detected.

As described above, the voice source direction/voice section deciding unit 134 can determine the position of the user whose posture or gesture has been detected based on the captured image and determine the voice source direction based on the image.

(Step S203)

In step S203, the detection process of the voice source direction and the voice section is performed based on the lip motion. This process corresponds to the generation process of the lip motion based detection information 122 generated by the lip motion based detecting unit 117 of the image processing unit 110 illustrated in Fig. 3.

As described above, the lip motion based detecting unit 117 estimates the utterance section based on a motion of the lip region. In other words, a time (voice section start time) at which an utterance starts and a time (voice section end time) at which an utterance ends are determined based on the mouth motion. The determination information is output to the voice source direction/voice section deciding unit 134 as the lip motion based detection information 122. As described above, the utterance section analysis process based on the lip motion is disclosed, for example, in JP 2012-3326 A, and the lip motion based detecting unit 117 uses a process disclosed, for example, in JP 2012-3326 A.

The voice source direction is decided based on the image position of the user whose lip motion has been detected. The voice source direction determination process using this image is identical to the process described above with reference to Fig. 13. However when the process of step S203 is applied, the users shown in the captured images a to c illustrated in Fig. 13 are users whose lip motion has been detected.

Basically, each of the processes of steps S201 to S203 in the flow illustrated in Fig. 12 is performed as a process of generating an information set of any one of the following information combinations:

(a) the voice section start position information and the voice source direction information; and
(b) the voice section end position information and the voice source direction information,

and outputting the generated information set to the voice source direction/voice section deciding unit 134.

Further, the processes of steps S201 to S203 are performed using the voice source direction/voice section deciding unit 134 illustrated in Fig. 3. The voice source direction/voice section deciding unit 134 sequentially performs the process in the order in which information output from the voice section output unit 133 or from the respective processing units of the image processing unit 110 is input.

(Step S204)

In step S204, the face direction or the line-of-sight direction is estimated. This process is performed by the face direction estimating unit 114 or the line-of-sight direction estimating unit 115 of the image processing unit 110 illustrated in Fig. 3, and corresponds to the generation process of the face/line-of-sight direction information 121 illustrated in Fig. 3.

As described above with reference to Fig. 7, the face direction estimating unit 114 and the line-of-sight direction estimating unit 115 determine a direction of the face based on the positional relation of the face parts included in the face region, and determine the direction in which the face looks as the line-of-sight direction as illustrated in Fig. 7. The face/line-of-sight direction information 121 including at least one piece of information of the face direction and the line-of-sight direction generated by the determination processes is output to the voice source direction/voice section deciding unit 134.

(Step S205)

Next, the process of step S205 is performed by the voice source direction/voice section deciding unit 134 of the voice processing unit 130 illustrated in Fig. 3.

As illustrated in Fig. 3, the voice source direction/voice section deciding unit 134 receives the following information:

(1) the voice source direction and the voice section information (= the detection information in step S201) which are based on the sound generated by the voice source direction estimating unit 132 and the voice section detecting unit 133 in the voice processing unit 130;
(2) the posture information 123 and the gesture information 124 (= the detection information in step S202) generated by the posture recognizing unit 119 and the gesture recognizing unit 120 of the image processing unit 110;
(3) the lip motion based detection information 122 (= the detection information in step S203) generated by the lip motion based detecting unit 117 of the image processing unit 110; and
(4) the face/line-of-sight direction information 121 (= the detection information in step S204) generated by the face direction estimating unit 114 and the line-of-sight direction estimating unit 115 of the image processing unit 110.

The voice source direction/voice section deciding unit 134 receives the above information (1) to (4). Here, the information is output from the respective processing units to the voice source direction/voice section deciding unit 134 at detection timings thereof only when the detection processes of the respective processing units are successfully performed. In other words, the respective pieces of detection information of (1) to (4) are not output to the voice source direction/voice section deciding unit 134 together at the same timing but individually output at a point in time at which the detection process of each processing unit is successfully performed.

Specifically, for example, when any one processing unit succeeds in detecting the voice section start position, the voice section start position information is output from the corresponding processing unit to the voice source direction/voice section deciding unit 134. Further, when any one processing unit succeeds in detecting the voice section end position, the voice section end position information is output from the corresponding processing unit to the voice source direction/voice section deciding unit 134.

Further, as described above, basically, when the processes of steps S201 to S203 in the flow illustrated in Fig. 12 are performed, performed is a process of generating any one of the following information combinations:

(a) the voice section start position information and the voice source direction information; and

(b) the voice section end position information and the voice source direction information,

and then outputting the generated combination to the voice source direction/voice section deciding unit 134.

In the process of step S204, when at least one of the face direction and the line-of-sight direction is successfully detected, at least one of the face direction information and the line-of-sight direction information is output to the voice source direction/voice section deciding unit 134.

In step S205, the voice source direction/voice section deciding unit 134 first determines whether input information input from each processing unit includes any one piece of the following information (a) and (b):

(a) the voice section start position information and the voice source direction information; and

(b) the voice section end position information and the voice source direction information.

When the input information is determined as including any one piece of the information (a) and the information (b), the process proceeds to step S206, but when the input information is determined as including neither the information (a) nor the information (b), the process returns to the detection processes of steps S201 to S204 and enters a standby state for information input.

(Step S206)

When it is determined in step S205 that the input information input from each processing unit includes any one piece of the following information (a) and (b):

(a) the voice section start position information and the voice source direction information; and

(b) the voice section end position information and the voice source direction information,

in step S206, the voice source direction/voice section deciding unit 134 performs a process of deciding the voice source direction and the voice section of the voice recognition target according to the type of the input information.

In other words, the voice source direction/voice section deciding unit 134 checks that the input information includes any one piece of the following information (a) and (b):

(a) the voice section start position information and the voice source direction information; and

(b) the voice section end position information and the voice source direction information.

Next, it is checked whether the information of (a) or (b) which is the input information has been acquired based on any one of the following information:

(1) the voice information;

(2) the posture information or the gesture information; and

(3) the lip motion.

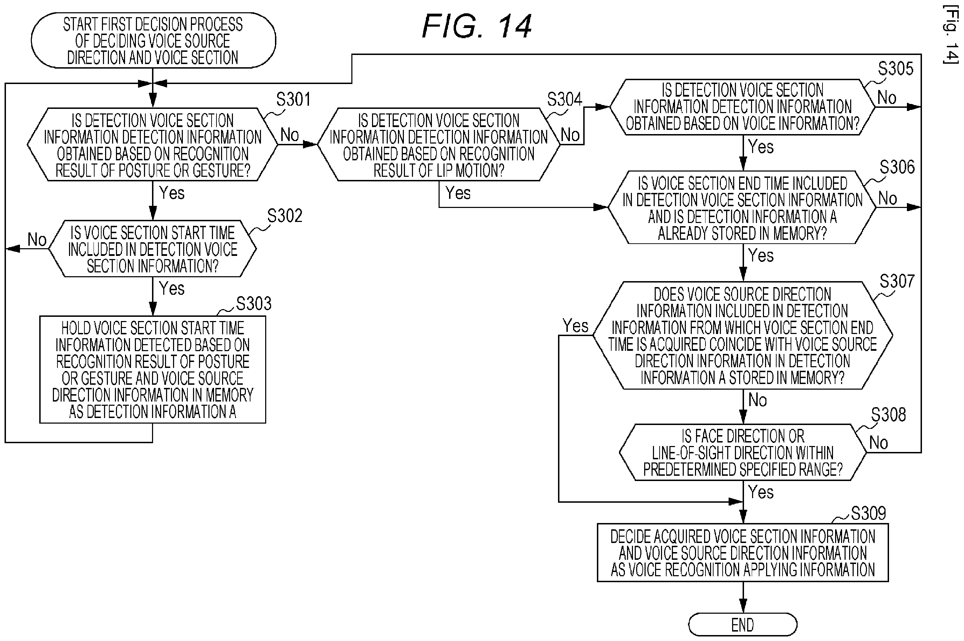

Further, the process of deciding the voice source direction and the voice section of the voice recognition target is performed based on the check result. The details of the process of step S206 will be described later with reference to Fig. 14 and subsequent drawings.

(Step S207)

A process of step S207 is a process of determining whether the voice source direction and the voice section have been decided in the voice source direction/voice section deciding unit 134. In this case, the voice source direction and the voice section are the voice source direction and the voice section of the voice recognition process target, and the voice section includes both the "voice section start position" and the "voice section end position."

Further, in step S207, when the voice source direction and the voice section are decided, a process of notifying the user of the decision may be performed, and, for example, a process of outputting a sound representing the decision through a speaker or outputting an image such as an icon representing the decision to a display unit may be performed.

Further, in the process according to the present disclosure, in the processes of steps S201 to S203, the voice source direction, the voice section are detected through different detecting units. When various kinds of detection processes are performed as described above and the detection result is obtained, notification may be given to the user. In other words, notification of a method used for detection of the voice source direction or the voice section may be given to the user such that a sound or an icon representing a detection method used for detection of the voice source direction or the voice section is output.

(3. Exemplary decision process of voice source direction and voice section)

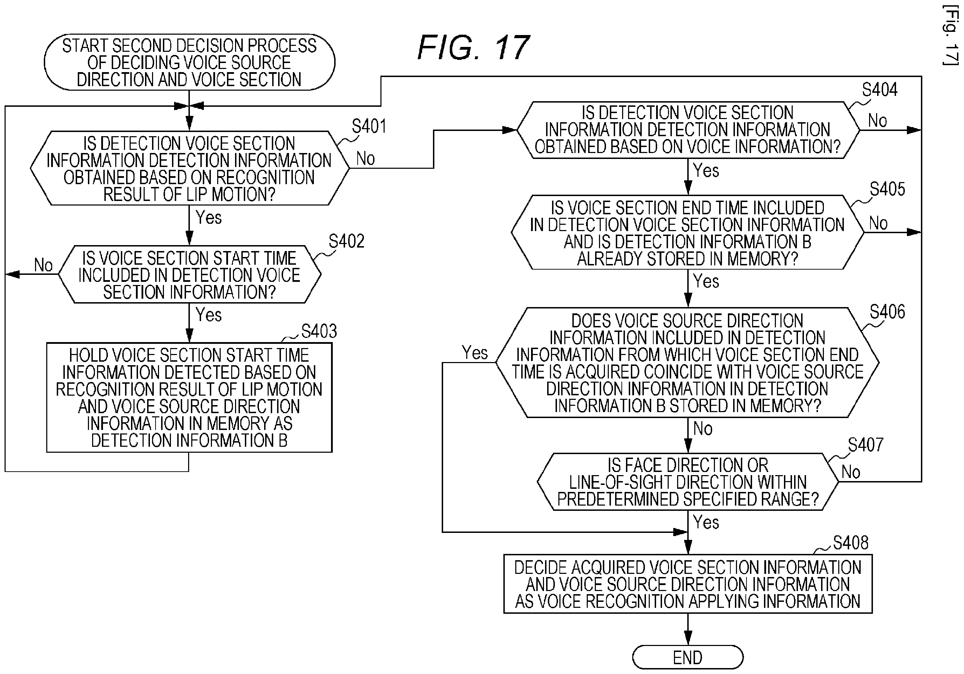

Next, a detailed sequence of the process of step S206 in the flowchart illustrated in Fig. 12 will be described. Two examples of the detailed sequence of the process will be described with reference to a flowchart illustrated in Fig. 14 and a flowchart illustrated in Fig. 17.

The process of step S206 in the flow illustrated in Fig. 12 is performed by the voice source direction/voice section deciding unit 134 illustrated in Fig. 3. The process of step S206 is a process of deciding the voice source direction and the voice section of the voice recognition target in view of which of the following information (1) to (3) has been based to acquire the information used for detection of the voice source direction and the voice section:

(1) the voice information;
(2) the posture information or the gesture information; and
(3) the lip motion.

Fig. 14 illustrates the flow for describing a detailed processing sequence when the voice section start position information is acquired based on the "posture information" or the "gesture information." Fig. 17 illustrates the flow for describing a detailed processing sequence when the voice section start position information is acquired based on the "lip motion information."

(3-1. First exemplary decision process of voice source direction and voice section)

First of all, the detailed processing sequence when the voice section start position information is acquired based on the "posture information" or the "gesture information" will be described with reference to the flowchart of Fig. 14.

(Step S301)

First of all, in step S301, the voice source direction/voice section deciding unit 134 illustrated in Fig. 3 determines whether the input detection information is the posture information 123 generated by the posture recognizing unit 119 of the voice recognition device illustrated in Fig. 3, the gesture information 124 generated by the gesture recognizing unit 120, or other information.

When the input detection information is the "posture information" or the "gesture information," the process proceeds to step S302. Meanwhile, when the input detection information is neither the "posture information" nor the "gesture information," the process proceeds to step S304.

(Step S302)

When the information input to the voice source direction/voice section deciding unit 134 is the "posture information" or the "gesture information," in step S302, the voice source direction/voice section deciding unit 134 determines whether the voice section start position (time) information is included in the input detection information.

When the voice section start position (time) information is included in the input detection information, the process proceeds to step S303. However, when the voice section start position (time) information is not included in the input detection information, the process returns to step S301.

(Step S303)

When the voice section start position (time) information is included in the input detection information, in step S303, the voice source direction/voice section deciding unit 134 stores the "voice section start position (time) information" acquired based on the "posture information" or the "gesture information" which is the input information and the "voice source direction information" in a memory.

The "voice section start position (time) information" acquired based on the "posture information" or the "gesture information" and the "voice source direction information" are referred to as "detection information A." In other words, the "detection information A" is as follows:

Detection information A = voice section start position (time) information based on posture information or gesture information and voice source direction information.

(Step S304)

When it is determined in step S301 that the information input to the voice source direction/voice section deciding unit 134 is neither the "posture information" nor the "gesture information," in step S304, the voice source direction/voice section deciding unit 134 determines whether the input detection information is the lip motion based detection information 122 generated by the lip motion based detecting unit 117 of the voice recognition device illustrated in Fig. 3 or not.
When the input detection information is the "lip motion based detection information," the process proceeds to step S306. However, when the input detection information is not the "lip motion based detection information," the process proceeds to step S305.

(Step S305)

When it is determined in step S304 that the detection information input to the voice source direction/voice section deciding unit 134 is not the "lip motion based detection information," in step S305, the voice source direction/voice section deciding unit 134 determines whether the input detection information is the "voice-based detection information" generated by the voice section detecting unit 133 of the voice processing unit 130 of the voice recognition device illustrated in Fig. 3 or not.
When the input detection information is the "voice-based detection information" generated by the voice section detecting unit 133, the process proceeds to step S306. However, when the input detection information is not the "voice-based detection information" generated by the voice section detecting unit 133, the process returns to step S301.

(Step S306)

Next, in step S306, the voice source direction/voice section deciding unit 134 determines whether the voice section end position (time) is included in the detected voice section information obtained from the detection information input to the voice source direction/voice section deciding unit 134 and whether the "detection information A," that is, detection information A = voice section start position (time) information and voice source direction information based on posture information or gesture information, is already stored in a memory.
Here, the process proceeds to step S306 only when the following conditions (a) and (b) are satisfied:

(a) determination of step S301 is No; and
(b) determination of step S304 or step S305 is Yes.

In other words, the process proceeds to step S306 when the two conditions are satisfied:

(a) determination of step S301 is No = the detected voice section information is based on neither the "posture information" nor the "gesture information"; and
(b) determination of step S304 or step S305 is Yes = the detected voice section information is based on the "lip motion information" or the "voice information."

In step S306, it is determined whether the following two conditions are satisfied:

(Condition 1) that the detected voice section information represents the voice section end position (time) based on the "lip motion information" or the "voice information" determined as Yes in step S304 or step S305; and
(Condition 2) that the "detection information A" is already stored in the memory:
detection information A = voice section start position (time) information based on posture information or gesture information and voice source direction information.

In other words, step S306 is determined as Yes when it is confirmed that information based on the "posture or gesture information" has been acquired and stored in the memory as the voice section start position information, and information based on the "lip motion information" or the "voice information" has been acquired as the voice section end position information.
The confirmation process of the above condition corresponds to the confirmation process of confirming whether a combination (set) of information used for the voice section start position and information used for the voice section end position corresponds to any one of (Set 1) and (Set 2) described above with reference to (2) of Fig. 11.
In other words,

(Set 1)

A set in which (A) the posture or gesture information is used for determination of the voice section start position (time), and (B) the lip motion information is used for determination of the voice section end position (time).
(Set 2)
A set in which (A) the posture or gesture information is used for determination of the voice section start position (time), and (C) the voice information is used for determination of the voice section end position (time). The confirmation process is performed to confirm whether the combination corresponds to any one of the sets.

When it is determined in step S306 that the above condition is satisfied, the process proceeds to step S307, but when it is determined that the above condition is not satisfied, the process returns to step S301.

(Step S307)

In step S307, the voice source direction/voice section deciding unit 134 performs the following determination process. It is determined whether the following two voice source direction information coincides with each other:

(a) the voice source direction information acquired together with the voice section end position information; and
(b) the voice source direction information acquired together with the voice section start position information. When the two voice source direction information coincides with each other, the process proceeds to step S309, but when the two voice source direction information does not coincide with each other, the process proceeds to step S308. Here, the coincidence determination performs a process that determines the two information coincides with each other when a coincidence is within a predetermined error range, for example, within an error range of 10% with respect to the angle (q) representing the voice source direction described above with reference to Figs. 4 and 5 as well as when the two information perfectly coincides with each other.

The determination process of step S307 is the process of determining whether the voice source direction information acquired together with the voice start position information based on the "posture or gesture information" coincides with the voice source direction information acquired together with the voice end position information based on the "lip motion information" or the "voice information."
In other words, it is confirmed whether the voice source directions obtained at two different timings of the voice section start position (time) and the voice section end position (time) obtained using completely different pieces of information coincide with each other. When the two directions coincide with each other, the voice section is likely to be an utterance given by one specific user, and thus it is determined that the voice section is the voice section that has to be selected as the voice recognition target, and the process proceeds to step S309.
Meanwhile, when it is determined in step S307 that the two voice source directions do not coincide with each other, the process proceeds to step S308. This is the case in which the voice source directions obtained at two different timings of the voice section start position (time) and the voice section end position (time) obtained using different pieces of information do not coincide with each other. The voice section is unlikely to be a right voice section corresponding to an utterance given by the same utterer, and it is finally determined whether the voice section is set as the voice recognition target through the following process of step S308.

(Step S308)

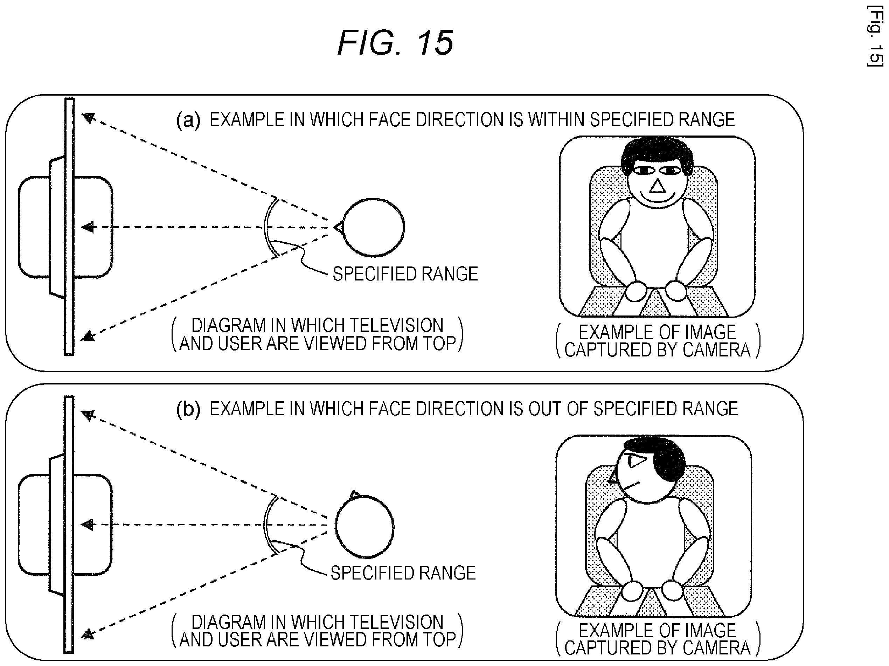

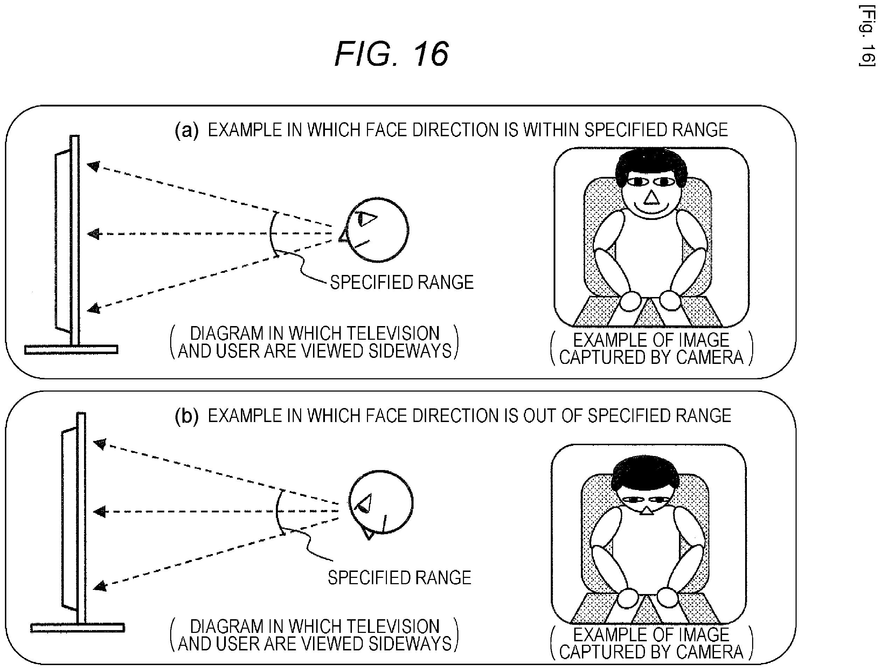

Step S308 is the process performed when it is determined in step S307 that the voice source direction detected in the detection process of the voice section start position does not coincide with the voice source direction detected when the voice section end position is detected.
In step S308, it is determined whether the face direction or the line-of-sight direction is within a predetermined range. This process is a process performed based on the face/ line-of-sight direction information 121 generated by the face direction determining unit 114 and the line-of-sight direction determining unit 115 of the image processing unit 110 illustrated in Fig. 3. The voice source direction/voice section deciding unit 134 determines whether the face direction or the line-of-sight direction of the user who is estimated as the voice source of the analysis target is within a predetermined range using the face/line-of-sight direction information 121 acquired at a time corresponding to the voice section of the analysis target or a time closest to the voice section.
An example of the determination process will be described with reference to Figs. 15 and 16. Fig. 15 is a diagram illustrating an example in which the face direction or the line-of-sight direction of the user of the determination target is changed in the horizontal direction. Fig. 16 is a diagram illustrating an example in which the face direction or the line-of-sight direction of the user of the determination target is changed in the vertical direction.
First of all, an example in which the face direction or the line-of-sight direction of the user of the determination target is changed in the horizontal direction will be described with reference to Fig. 15. Fig. 15 illustrates the following two examples:

(a) when the face direction (or the line-of-sight direction) is within a previously specified range; and
(b) when the face direction (or the line-of-sight direction) is outside a previously specified range.

For example, the specified range is specified by an angle in which the user's face (line-of-sight) looks with respect to the television with the voice recognition device as illustrated in Fig. 15. When the face direction or the line-of-sight direction of the user is within a predetermined range in the vertical direction (the front direction) with respect to the television, it is determined that the face direction or the line-of-sight direction is within the specified range.

Fig. 15 illustrates examples of images captured by the camera of the information input unit installed in the television. In the example illustrated in (a) of Fig. 15, the face direction (or the line-of-sight direction) is within the specified range, and the user who looks in the front direction is shown in the image captured by the camera. However, in the example of (b) of Fig. 15, the face direction (or the line-of-sight direction) is out of the specified range, and the user who looks sideways is shown in the image captured by the camera.

The specified range information is information stored in a predetermined memory, and the voice source direction/voice section deciding unit 134 receives the face/ line-of-sight direction information 121 generated by the face direction estimating unit 114 and the line-of-sight direction estimating unit 115, compares the face/line-of-sight direction information 121 with the specified range information, and determines whether the face direction or the line-of-sight direction of the user is within the specified range or out of the specified range.

Fig. 16 illustrates an example in which the face direction or the line-of-sight direction of the user of the determination target is changed in the vertical direction. Similarly to Fig. 15, Fig. 16 illustrates the following two examples:

(a) when the face direction (or the line-of-sight direction) is within a specified range; and
(b) when the face direction (or the line-of-sight direction) is outside a specified range.

The specified range is specified by an angle in which the user's face (line of sight) looks with respect to the television with the voice recognition device as illustrated in Fig. 16. When the face direction or the line-of-sight direction of the user is within a predetermined range in the vertical direction (the front direction) with respect to the television, it is determined that the face direction or the line-of-sight direction is within the specified range.

Fig. 16 also illustrates examples of images captured by the camera of the information input unit installed in the television, similarly to Fig. 15. In the example illustrated in (a) of Fig. 16, the face direction (or the line-of-sight direction) is within the specified range, and the user who looks in the front direction is shown in the image captured by the camera. However, in the example of (b) of Fig. 16, the face direction (or the line-of-sight direction) is out of the specified range, and the user who looks down is shown in the captured image captured by the camera.

The specified range information illustrated in Figs. 15 and 16 is a three dimensional information decided in view of the vertical direction as well as the horizontal direction. The three-dimensional specified range information is stored in a predetermined memory. The voice source direction/voice section deciding unit 134 receives the face/ line-of-sight direction information 121 generated by the face direction estimating unit 114 and the line-of-sight direction estimating unit 115, three dimensionally compares the face/line-of-sight direction information 121 with the specified range information, and determines whether the face direction or the line-of-sight direction of the user is within the specified range or out of the specified range in the horizontal direction and the vertical direction.

When the voice source direction/voice section deciding unit 134 determines that the face direction or the line-of-sight direction of the user is within the specified range in the horizontal direction and the vertical direction in step S308, the process proceeds to step S309. In this case, the voice information from which the voice section was detected is selected as the voice recognition target.

Meanwhile, when the face direction or the line-of-sight direction of the user is determined as being out of the specified range, a determination in step S308 is No, and the process returns to step S301. In this case, the voice information from which the voice section was detected is not selected as the voice recognition target and discarded.

(Step S309)

Step S309 is the process of deciding a voice having the acquired voice section information and the voice source direction information as the voice recognition target. The voice is decided as the voice recognition target when any of the following conditions is satisfied:

(Condition 1) When a determination of step S307 is Yes, that is, when the voice source direction in which the voice section start position is detected coincides with the voice source direction in which the voice section end position is detected.

(Condition 2) When the voice source directions do not coincide with each other, but the face direction or the line-of-sight direction is determined as being within the specified range.

When any one of the above conditions (1) and (2) is satisfied, the voice source direction/voice section deciding unit 134 decides a voice having the acquired voice section information and the voice source direction information as the voice recognition target. The voice information decided in this decision process is output to the voice source extracting unit 135 of the voice processing unit 130 illustrated in Fig. 3, and then the voice source extraction process is performed. Further, the voice source extraction result is output to the voice recognizing unit 136, and then the voice recognition process is performed.

(3-2. Second exemplary decision process of voice source direction and voice section)

Next, another processing example of the process of step S206 in the flow illustrated in Fig. 12 will be described with reference to a flowchart of Fig. 17.

As described above, the process of step S206 in the flow of Fig. 12 is the process of deciding the voice source direction and the voice section of the voice recognition target in view of which of the following information (1) and (3) has been based to acquire the information used for detection of the voice source direction and the voice section:

(1) the voice information;
(2) the posture information or the gesture information; and
(3) the lip motion.

Fig. 17 is a flowchart illustrating a detailed process when the voice section start position information is acquired based on the "lip motion information." The processes of respective steps in this flow will be sequentially described.

(Step S401)

First of all, in step S401, the voice source direction/voice section deciding unit 134 illustrated in Fig. 3 determines the input detection information is the lip motion based detection information 122 generated by the lip motion based detecting unit 117 of the voice recognition device illustrated in Fig. 3 or not.
When the input detection information is the "lip motion information," the process proceeds to step S402. However, when the input detection information is not the "lip motion information," the process proceeds to step S404.

(Step S402)

When the information input to the voice source direction/voice section deciding unit 134 is the "lip motion information," in step S402, the voice source direction/voice section deciding unit 134 determines whether the voice section start position (time) information is included in the input detection information.
When the voice section start position (time) information is included in the input detection information, the process proceeds to step S403. However, when the voice section start position (time) information is not included in the input detection information, the process returns to step S401.

(Step S403)

When the voice section start position (time) information is included in the input detection information, in step S403, the voice source direction/voice section deciding unit 134 stores the "voice section start position (time) information" acquired based on the "lip motion information" which is the input information and the "voice source direction information" in a memory.
Here, the "voice section start position (time) information" acquired based on the "lip motion information" and the "voice source direction information" are referred to as "detection information B." In other words, the "detection information B" is as follows:
Detection information B = voice section start position (time) information based on lip motion information and voice source direction information.

(Step S404)

When it is determined in step S401 that the information input to the voice source direction/voice section deciding unit 134 is not the "lip motion information," in step S404, the voice source direction/voice section deciding unit 134 determines whether the input detection information is the "voice-based detection information" generated by the voice section detecting unit 133 of the voice processing unit 130 of the voice recognition device illustrated in Fig. 3 or not.

When the input detection information is the "voice-based detection information" generated by the voice section detecting unit 133, the process proceeds to step S405. However, when the input detection information is not the "voice-based detection information" generated by the voice section detecting unit 133, the process returns to step S401.

(Step S405)

Next, in step S405, the voice source direction/voice section deciding unit 134 determines whether the voice section end position (time) is included in the detected voice section information obtained from the detection information input to the voice source direction/voice section deciding unit 134, and whether the "detection information B," that is, detection information B =the voice section start position (time) information based on the lip motion information and the voice source direction information), is already stored in a memory.

Here, the process proceeds to step S405 only when the following conditions (a) and (b) are satisfied:

(a) determination of step S401 is No; and
(b) determination of step S404 is Yes.

In other words, the process proceeds to step S405 when the two conditions are satisfied:

(a) determination of step S401 is No = the detected voice section information is not based on the "lip motion information"; and
(b) determination of step S404 is Yes = the detected voice section information is based on the "voice information."

In step S405, it is determined whether the following two conditions are satisfied:

(Condition 1) that the detected voice section information represents the voice section end position (time) based on the "voice information" determined as Yes in step S404; and

(Condition 2) that the "detection information B" is already stored in the memory:

$$\text{detection information B} = \text{voice section start position (time) information based on lip}$$
$$\text{motion information and voice source direction information.}$$

In other words, step S405 is determined as Yes when it is confirmed that information based on the "lip motion information" has been acquired and stored in the memory as the voice section start position information, and information based on the "voice information" has been acquired as the voice section end position information.

The confirmation process of the above condition corresponds to the confirmation process of confirming whether a combination (set) of information used for the voice section start position and information used for the voice section end position corresponds to (Set 3) described above with reference to (2) of Fig. 11. In other words, the confirmation process is performed to confirm that the combination corresponds to (Set 3) a set in which (B) the lip motion information is used for determination of the voice section start position (time), and (C) the voice information is used for determination of the voice section end position (time).

When it is determined in step S405 that the above condition is satisfied, the process proceeds to step S406, but when it is determined that the above condition is not satisfied, the process returns to step S401.

(Step S406)

In step S406, the voice source direction/voice section deciding unit 134 performs the following determination process.

It is determined whether the following two voice source direction information coincides with each other:

(a) the voice source direction information acquired together with the voice section end position information; and
(b) the voice source direction information acquired together with the voice section start position information. When the two voice source direction information coincides with each other, the process proceeds to step S408, but when the two voice source direction information does not coincide with each other, the process proceeds to step S407. Here, the coincidence determination performs a process that determines the two information coincides with each other when a coincidence is within a predetermined error range, for example, within an error range of 10% with respect to the angle (q) representing the voice source direction described above with reference to Figs. 4 and 5 as well as when the two information perfectly coincides with each other.

The determination process of step S406 is the process of determining whether the voice source direction information acquired together with the voice start position information based on the "lip motion information" coincides with the voice source direction information acquired together with the voice end position information based on the "voice information."

In other words, it is confirmed whether the voice source directions obtained at two different timings of the voice section start position (time) and the voice section end position (time) obtained using completely different pieces of information coincide with each other. When the two directions coincide with each other, the voice section is likely to be an utterance given by one specific user, and thus it is determined that the voice section is the voice section that has to be selected as the voice recognition target, and the process proceeds to step S408.

Meanwhile, when it is determined in step S406 that the two voice source directions do not coincide with each other, the process proceeds to step S407. This is the case in which the voice source directions obtained at two different timings of the voice section start position (time) and the voice section end position (time) obtained using different pieces of information do not coincide with each other. The voice section is unlikely to be a right voice section corresponding to an utterance given by the same utterer, and it is finally determined whether the voice section is set as the voice recognition target through a process of step S407.

(Step S407)

Step S407 is the process performed when it is determined in step S406 that the voice source direction detected in the detection process of the voice section start position does not coincide with the voice source direction detected when the voice section end position is detected.

In step S407, it is determined whether the face direction or the line-of-sight direction is within a predetermined range. This process is a process performed based on the face/ line-of-sight direction information 121 generated by the face direction determining unit 114 and the line-of-sight direction determining unit 115 of the image processing unit 110 illustrated in Fig. 3. The voice source direction/voice section deciding unit 134 determines whether the face direction or the line-of-sight direction of the user who is estimated as the voice source of the analysis target is within a predetermined range using the face/line-of-sight direction information 121 acquired at a time corresponding to the voice section of the analysis target or a time closest to the voice section.

The determination process is identical to the process of step S308 in the flow of Fig. 14 and the process described above with reference to Figs. 15 and 16.

When the voice source direction/voice section deciding unit 134 determines that the face direction or the line-of-sight direction of the user is within the specified range in the horizontal direction and the vertical direction in step S407, the process proceeds to step S408. In this case, the voice information from which the voice section was detected is selected as the voice recognition target.

Meanwhile, when the face direction or the line-of-sight direction of the user is determined as being out of the specified range, a determination in step S407 is No, and the process returns to step S401. In this case, the voice information from which the voice section was detected is not selected as the voice recognition target and discarded.

(Step S408)

Step S408 is the process of deciding a voice having the acquired voice section information and the voice source direction information as the voice recognition target. The voice is decided as the voice recognition target when any of the following conditions is satisfied:

(Condition 1) When a determination of step S406 is Yes, that is, when the voice source direction in which the voice section start position is detected coincides with the voice source direction in which the voice section end position is detected; and
(Condition 2) When the voice source directions do not coincide with each other, but the face direction or the line-of-sight direction is determined as being within the specified range.

When any one of the above conditions (1) and (2) is satisfied, the voice source direction/voice section deciding unit 134 decides a voice having the acquired voice section information and the voice source direction information as the voice recognition target. The voice information decided in this decision process is output to the voice source extracting unit 135 of the voice processing unit 130 illustrated in Fig. 3, and then the voice source extraction process is performed.

Further, the voice source extraction result is output to the voice recognizing unit 136, and then the voice recognition process is performed.

(4. Embodiment of identifying that user is viewing a specific position and performing processing)

Next, an embodiment of identifying whether the user is viewing a predetermined specific position and performing processing will be described.

This process relates to an embodiment of identifying whether the user is viewing a predetermined specific position and performing determination of an utterance section or the like, for example, without determining a posture or a gesture which is the user's hand shape or motion described in the above embodiment.

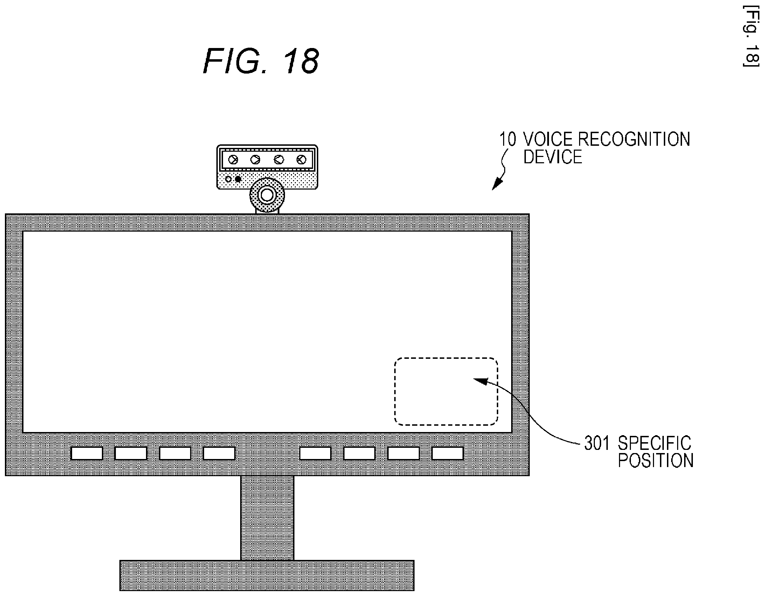

Specifically, for example, when the voice recognition device 10 is a television, a region of a part of a screen of the television is set as a specific position 301 as illustrated in Fig. 18. It is determined whether the user (utterer) is viewing the specific position 301. When it is determined that the user is giving an utterance while viewing the specific position 301, the utterance is regarded as the voice recognition target. However, when it is determined that the user (utterer) is not viewing the specific position 301 during an utterance period of time although an utterance is detected, the utterance is not regarded as the voice recognition target but discarded.

By performing this process, it is possible to cause the voice recognition device to properly determine an utterance to be used as the voice recognition target even though the user does not take a motion of raising the hand or a special action of showing a paper as the shape of the hand.

The determination as to whether the user is viewing a specific position is performed based on an image captured by the camera 21 of the information input unit 20 illustrated in Fig. 2. Specifically, the determination may be performed based on the face estimation information or the line-of-sight direction estimation information generated by the face direction estimating unit 114 or the line-of-sight direction estimating unit 115 of the image processing unit 110 illustrated in Fig. 3.

In other words, it is possible to estimate what the user is viewing based on the estimation result of the user position and the face direction obtained from the image information. For example, it is determined whether the user is viewing the specific position 301 such as the lower right portion of the television screen as described above with reference to Fig. 18. In the example illustrated in Fig. 18, a part of the television screen is set as the specific position 301, but a setting may be made such that the entire television screen is set as the specific position, it is determined whether the user is viewing the television screen, and it is determined whether the voice recognition process is to be performed based on the determination result.

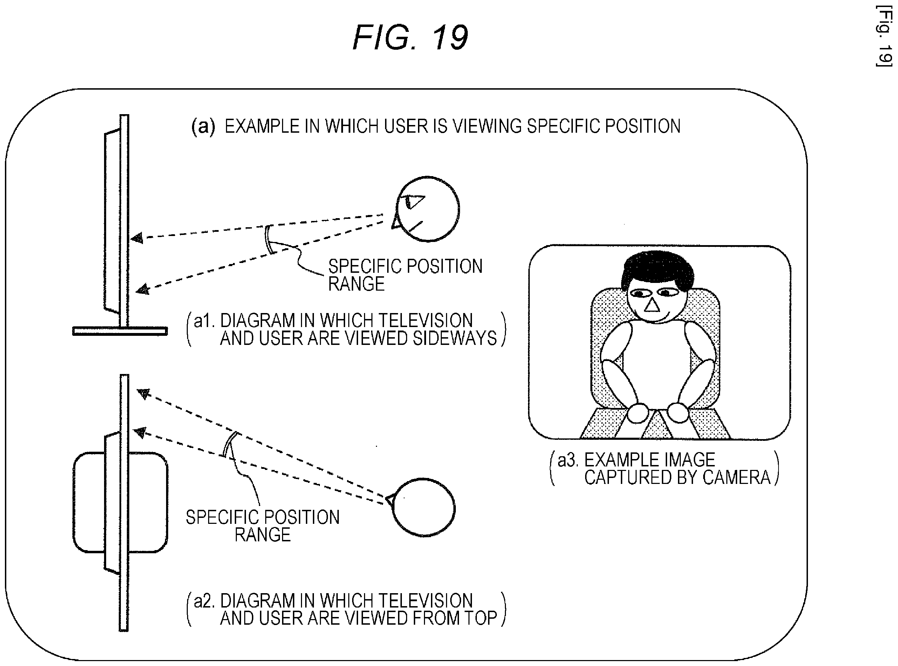

The determination as to whether the user (utterer) is viewing the specific position is performed based on an image captured by the camera. A concrete example thereof will be described with reference to Fig. 19. Fig. 19 illustrates an example in which the specific position is set to the lower right region of the television as described above with reference to Fig. 18, and illustrates the following drawings. (a1) is a diagram in which the television and the user are viewed sideways, (a2) is a diagram in which the television and the user are viewed from the top, and (a3) is a diagram illustrating an example of an imaged captured by the camera.

When the user is viewing the specific position, the image is captured by the camera like an image illustrated in Fig. 19(a3). It can be determined whether the user is viewing the specific position, for example, based on the user's position with respect to the television with the voice recognition device or an angle in which the face (line of sight) looks as illustrated in Fig. 19. This can be acquired through analysis of the captured image.

In order to determine whether the user is viewing the specific position, it is necessary to analyze three-dimensional information in view of the vertical direction as well as the horizontal direction as illustrated in Fig. 19. The three-dimensional specified range information is information stored in a previously set memory.

The voice source direction/voice section deciding unit 134 receives the face/ line-of-sight direction information 121 generated by the face direction estimating unit 114 and the line-of-sight direction estimating unit 115, three dimensionally compares the face/line-of-sight direction information 121 with the specified range information, and determines whether the face direction or the line-of-sight direction of the user is within the range in which the user can be determined as being viewing the specific position in both the horizontal direction and the vertical direction.

Here, determination as to whether an utterance is to be set as the voice recognition target may be performed in various forms. For example, the following settings may be made:

(1) An utterance is to be set as the voice recognition target only when the user is viewing the specific position during the voice section serving as the utterance period of time, that is, during the whole period of time from an utterance start point in time to an utterance end point in time;

(2) An utterance is to be set as the voice recognition target when the user is determined as being viewing the specific position for even a moment in the voice section serving as the utterance period of time, that is, in the whole period of time from an utterance start point in time to an utterance end point in time; and

(3) An utterance is to be set as the voice recognition target when the user is determined as being viewing the specific position during a predetermined period of time, for example, 2 seconds, in the voice section serving as the utterance period of time, that is, in the whole period of time from an utterance start point in time to an utterance end point in time.

For example, various settings can be made.

In an embodiment using the user who is viewing the specific position as described above, since it is unnecessary to take a predetermined action or motion such as a posture or a gesture, the user's burden can be reduced.

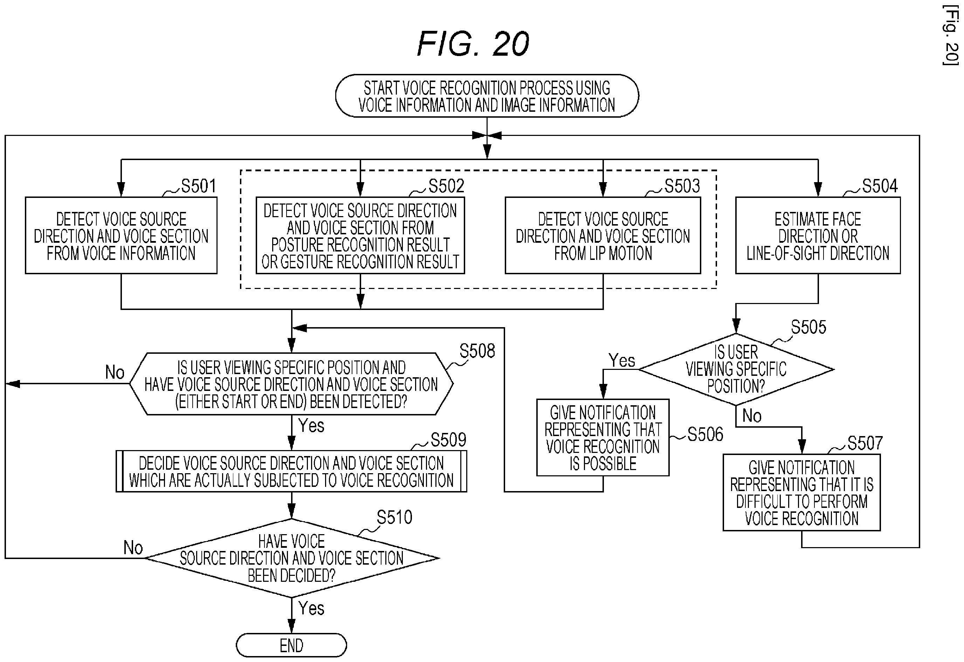

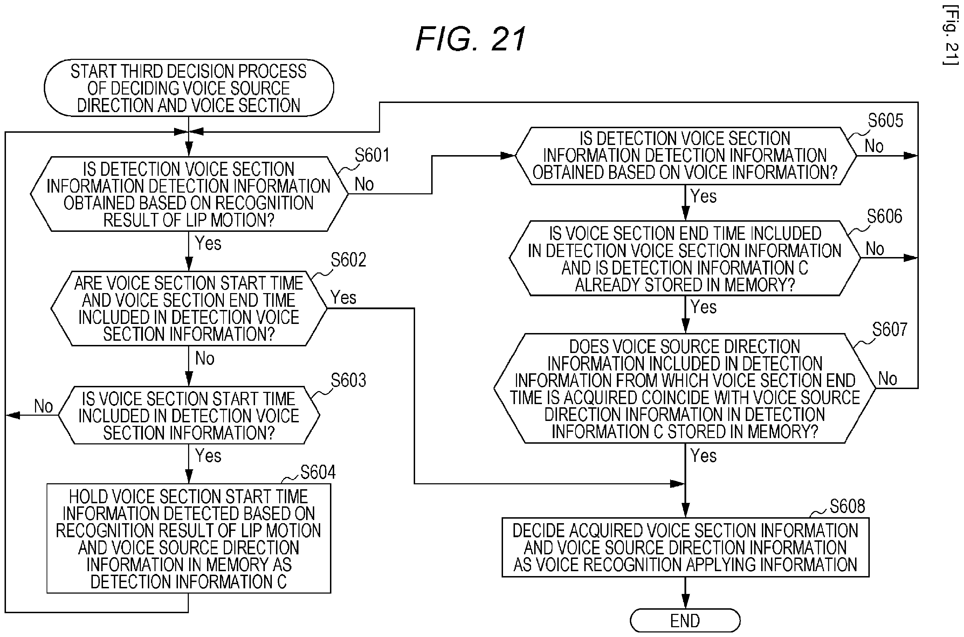

The processing sequence of the present embodiment will be described with reference to flowcharts illustrated in Figs. 20 and 21.

Fig. 20 is a flowchart for describing the decision process sequence of the voice source direction and the voice section performed by the voice recognition device of the present embodiment. The flowchart of Fig. 20 corresponds to the flowchart of Fig. 12 described above.

The process illustrated in Fig. 20 is performed by the voice recognition device including the image processing unit 110 and the voice processing unit 130 illustrated in Fig. 3. For example, this process may be performed such that a program recording a processing sequence according to the flow of Fig. 20 is read from a memory and executed under control of a data processing unit including a CPU having a program execution function or the like.

The process of respective steps in the processing flow illustrated in Fig. 20 will be sequentially described.

(Step S501)

First of all, in step S501, the detection process of the voice source direction and the voice section is performed based on the voice information. This process is performed by the voice source direction estimating unit 132 and the voice section detecting unit 133 of the voice processing unit 130 illustrated in Fig. 3. This process corresponds to the detection process of the voice source direction and the voice section based on only a sound described above with reference to Figs. 4 to 6.

(Step S502)

In step S502, the detection process of the voice source direction and the voice section is performed based on a posture recognition result or a gesture recognition result. This process is a process in which the voice source direction/voice section deciding unit 134 detects the voice source direction and the voice section based on the posture information 123 generated by the posture recognizing unit 119 of the image processing unit 110 illustrated in Fig. 3 or the gesture information 124 generated by the gesture recognizing unit 120 thereof. This process corresponds to the detection process of the voice source direction and the voice section using the posture information or the gesture information described above with reference to Figs. 8 to 10. For example, a concrete example is the process described above with reference to Fig. 13.

In the present embodiment, the process of step S502 may be omitted. When the process of step S502 is omitted, the hand region detecting unit 118 of Fig. 3 may be omitted.

(Step S503)

In step S503, the detection process of the voice source direction and the voice section is performed based on the lip motion. This process corresponds to the generation process of the lip motion based detection information 122 generated by the lip motion based detecting unit 117 of the image processing unit 110 illustrated in Fig. 3. As described above, the lip motion based detecting unit 117 estimates the utterance section based on a motion of the lip region. In other words, a time (voice section start time) at which an utterance starts and a time (voice section end time) at which an utterance ends are determined based on the mouth motion. The determination information is output the voice source direction/voice section deciding unit 134 as the lip motion based detection information 122.

Basically, each of the processes of steps S501 to S503 in the flow illustrated in Fig. 20 is performed as a process of generating an information set of any one of the following information combinations:

(a) the voice section start position information and the voice source direction information; and
(b) the voice section end position information and the voice source direction information,

and outputting the generated information set to the voice source direction/voice section deciding unit 134.

Further, the processes of steps S501 to S503 are performed using the voice source direction/voice section deciding unit 134 illustrated in Fig. 3. The voice source direction/voice section deciding unit 134 sequentially performs the process in the order in which information output from the voice section output unit 133 or from the respective processing units of the image processing unit 110 is input.

(Step S504)

In step S504, the face direction or the line-of-sight direction is estimated. This process is performed by the face direction estimating unit 114 or the line-of-sight direction estimating unit 115 of the image processing unit 110 illustrated in Fig. 3, and corresponds to the generation process of the face/line-of-sight direction information 121 illustrated in Fig. 3.
As described above with reference to Fig. 7, the face direction estimating unit 114 and the line-of-sight direction estimating unit 115 determines a direction of the face based on the positional relation of the face parts included in the face region, and determines the direction in which the face looks as the line-of-sight direction as illustrated in Fig. 7. The face/line-of-sight direction information 121 including at least one piece of information of the face direction and the line-of-sight direction generated by the determination processes is output to the voice source direction/voice section deciding unit 134.

(Step S505)

Step S505 is a process specific to the present embodiment. Step S505 is the process of determining whether the user (utterer) is viewing a predetermined specific position. In other words, for example, it is determined whether the user is viewing the specific position 301 set to a region of a part of the television as described above with reference to Figs. 18 and 19.
The determination criteria can be variously set as described above. For example, when it is determined that the user is continuously viewing the specific position during a predetermined period of time, a determination of step S505 is Yes, and the process proceeds to step S506. However, when it is determined that the user is not continuously viewing the specific position during a predetermined period of time, a determination of step S505 is No, and the process proceeds to step S507. Here, the determination as to whether the user is viewing the specific position is performed based on the analysis information of the face direction or the line-of-sight direction.

(Step S506)

When it is determined in step S505 that the user (utterer) is viewing a predetermined specific position, in step S506, the user is notified of the fact that voice recognition can be performed. For example, a message may be displayed on a part of a display unit of the television. Alternatively, notification may be given through an output of a sound such as a chime.

(Step S507)

However, when it is determined in step S505 that the user (utterer) is not viewing a predetermined specific position, in step S507, the user is notified of the fact that voice recognition is not performed. For example, this process may be also performed such that a message is displayed on a part of the display unit of the television. Alternatively, notification may be given through an output of a sound such as a chime.

(Step S508)

Next, the process of step S508 is performed by the voice source direction/voice section deciding unit 134 of the voice processing unit 130 illustrated in Fig. 3. As illustrated in Fig. 3, the voice source direction/voice section deciding unit 134 receives the following information:

(1) the voice source direction and the voice section information (= the detection information in step S501)which are based on the sound generated by the voice source direction estimating unit 132 and the voice section detecting unit 133 in the voice processing unit 130;
(2) the posture information 123 and the gesture information 124 (= the detection information in step S502) generated by the posture recognizing unit 119 and the gesture recognizing unit 120 of the image processing unit 110;
(3) the lip motion based detection information 122 (= the detection information in step S503) generated by the lip motion based detecting unit 117 of the image processing unit 110; and
(4) the face/line-of-sight direction information 121 (= the detection information in step S504) generated by the face direction estimating unit 114 and the line-of-sight direction estimating unit 115 of the image processing unit 110.

The voice source direction/voice section deciding unit 134 receives the above information (1) to (4). In the present embodiment, the information (2) can be omitted as described above. Here, each piece of information is output from the respective processing units to the voice source direction/voice section deciding unit 134 at detection timings thereof only when the detection processes of the respective processing units are successfully performed.

Similarly to the process described above with reference to the flow of Fig. 12, basically, when the processes of steps S501 to S503 in the flow illustrated in Fig. 20 are performed, performed is a process of generating any one of the following information combinations:

(a) the voice section start position information and the voice source direction information; and
(b) the voice section end position information and the voice source direction information,

and then outputting the generated combination to the voice source direction/voice section deciding unit 134.

In the process of step S504, when at least one of the face direction and the line-of-sight direction is successfully detected, at least one of the face direction information and the line-of-sight direction information is output to the voice source direction/voice section deciding unit 134.

In step S508, it is determined whether the following two conditions are satisfied:

(Condition 1) that the user (utterer) is determined as being viewing the specific position; and
(Condition 2) that an information set of either the voice section start position information and the voice source direction information or the voice section end position information and the voice source direction information has been acquired.

When it is determined in step S508 that both of (condition 1) and (condition 2) have been satisfied, the process proceeds to step S509. However, when it is determined that any one of (condition 1) and (condition 2) is not satisfied, the process returns to the detection process of steps S501 to S504, and it is on standby for information input.

(Step S509)

When it is determined in step S508 that both of (condition 1) and (condition 2) have been satisfied, in step S509, the process of deciding the voice source direction and the voice section of the voice recognition target is performed. The details of the process of step S509 will be described later in detail with reference to Fig. 21.

(Step S510)

Step S510 is the process of determining whether the voice source direction and the voice section have been decided by the voice source direction/voice section deciding unit 134. In this case, the voice source direction and the voice section are the voice source direction and the voice section to be used as the voice recognition process target, and the voice section includes the "voice section start position" and the "voice section end position."

Next, an exemplary detailed process of step S509 in the flow of Fig. 20 will be described with reference to a flowchart illustrated in Fig. 21. The process of step S509 in the flow illustrated in Fig. 21 is performed when it is determined in step S508 that the following two conditions are satisfied:

(Condition 1) that the user (utterer) is determined as being viewing the specific position; and
(Condition 2) that an information set of either the voice section start position information and the voice source direction information or the voice section end position information and the voice source direction information has been acquired. The process of step S509 is performed when it is determined that both (condition 1) and (condition 2) are satisfied, and is the process of deciding the voice source direction and the voice section of the voice recognition target.

The detailed sequence of step S509 will be described below with reference to Fig. 21.

(Step S601)

First of all, in step S601, the voice source direction/voice section deciding unit 134 illustrated in Fig. 3 determines whether the input detection information is the lip motion based detection information 122 generated by the lip motion based detecting unit 117 of the voice recognition device illustrated in Fig. 3 or not.

When the input detection information is the "lip motion information," the process proceeds to step S602. However, when the input detection information is not the "lip motion information," the process proceeds to step S605.

(Step S602)

When the information input to the voice source direction/voice section deciding unit 134 is the "lip motion information," in step S602, the voice source direction/voice section deciding unit 134 determines whether two pieces of information of the voice section start position (time) information and the voice section end position (time) information are included in the input detection information.

When the two pieces of information of the voice section start position (time) information and the voice section end position (time) information are included in the input detection information, the process proceeds to step S608, and the acquired voice section information is set as the voice recognition target.

However, when any of the voice section start position (time) information and the voice section end position (time) information is not included in the input detection information, the process proceeds to step S603.

(Step S603)

When the information input to the voice source direction/voice section deciding unit 134 is the "lip motion information" but any of the voice section start position (time) information and the voice section end position (time) information is not included in the input detection information, in step S603, it is determined whether the voice section start position (time) information is included in the input detection information.

When the voice section start position (time) information is included in the input detection information, the process proceeds to step S604. However, when the voice section start position (time) information is not included in the input detection information, the process returns to step S601.

(Step S604)

When the voice section start position (time) information is included in the input detection information, in step S604, the voice source direction/voice section deciding unit 134 stores the "voice section start position (time) information" acquired based on the "lip motion information" which is the input information and the "voice source direction information" in the memory.

Here, the "voice section start position (time) information" acquired based on the "lip motion information" and the "voice source direction information" are referred to as "detection information C." In other words, the "detection information C" is as follows:Detection information C = voice section start position (time) information based on lip motion information and voice source direction information.

(Step S605)

When it is determined in step S601 that the information input to the voice source direction/voice section deciding unit 134 is not the "lip motion information," in step S605, the voice source direction/voice section deciding unit 134 determines whether the input detection information is the "voice-based detection information" generated by the voice section detecting unit 133 of the voice processing unit 130 of the voice recognition device illustrated in Fig. 3 or not.

When the input detection information is the "voice-based detection information" generated by the voice section detecting unit 133, the process proceeds to step S606. However, when the input detection information is not the "voice-based detection information" generated by the voice section detecting unit 133, the process returns to step S601.

(Step S606)

Next, in step S606, the voice source direction/voice section deciding unit 134 determines whether the voice section end position (time) is included in the detected voice section information obtained from the detection information input to the voice source direction/voice section deciding unit 134, and whether the "detection information C," that is, detection information C = the voice section start position (time) information based on the lip motion information and the voice source direction information),
is already stored in a memory.

Here, the process proceeds to step S606 only when the following conditions (a) and (b) are satisfied:

(a) determination of step S601 is No; and
(b) determination of step S605 is Yes.

In other words, the process proceeds to step S606 when the two conditions are satisfied:

(a) determination of step S601 is No = the detected voice section information is not based on the "lip motion information"; and

(b) determination of step S605 is Yes = the detected voice section information is based on the "voice information."

In step S606, it is determined whether the following two conditions are satisfied:

(Condition 1) that the detected voice section information represents the voice section end position (time) based on the "voice information" determined as Yes in step S605; and

(Condition 2) that the "detection information C" is already stored in the memory:
detection information C = voice section start position (time) information based on lip motion information and voice source direction information.

In other words, step S606 is determined as Yes when it is confirmed that information based on the "lip motion information" has been acquired and stored in the memory as the voice section start position information, and information based on the "voice information" has been acquired as the voice section end position formation.

The confirmation process of the above condition corresponds to the confirmation process of confirming whether a combination (set) of information used for the voice section start position and information used for the voice section end position corresponds to (Set 3) described above with reference to (2) of Fig. 11. In other words, the confirmation process is performed to confirm that the combination corresponds to (Set 3) a set in which (B) the lip motion information is used for determination of the voice section start position (time), and (C) the voice information is used for determination of the voice section end position (time). In the present embodiment, in addition to the above condition, a condition that it is confirmed that the user (utterer) is viewing the specific position is added as a condition under which the process is performed. When it is determined in step S606 that the above conditions are satisfied, the process proceeds to step S607, but when it is determined that the above conditions are not satisfied, the process returns to step S601.

(Step S607)

In step S607, the voice source direction/voice section deciding unit 134 performs the following determination process.

It is determined whether the following two voice source direction information coincides with each other:

(a) the voice source direction information acquired together with the voice section end position information; and
(b) the voice source direction information acquired together with the voice section start position information.

When the two voice source direction information coincides with each other, the process proceeds to step S608, but when the two voice source direction information does not coincide with each other, the process proceeds to step S601. Here, the coincidence determination performs a process that determines the two information coincides with each other when a coincidence is within a predetermined error range, for example, within an error range of 10% with respect to the angle (q) representing the voice source direction described above with reference to Figs. 4 and 5 as well as when the two information perfectly coincides with each other.

The determination process of step S607 is the process of determining whether the voice source direction information acquired together with the voice start position information based on the "lip motion information" coincides with the voice source direction information acquired together with the voice end position information based on the "voice information."

In other words, it is confirmed whether the voice source directions obtained at two different timings of the voice section start position (time) and the voice section end position (time) obtained using completely different pieces of information coincide with each other. When the two directions coincide with each other, the voice section is likely to be an utterance given by one specific user, and thus it is determined that the voice section is the voice section that has to be selected as the voice recognition target, and the process proceeds to step S608.

Meanwhile, it is determined in step S607 that the two voice source directions do not coincide with each other when the voice source directions obtained at two different timings of the voice section start position (time) and the voice section end position (time) obtained using different pieces of information do not coincide with each other. The voice section is unlikely to be a right voice section corresponding to an utterance given by the same utterer, and the voice recognition target is not set, and the process returns to step S601.

(Step S608)

Step S608 is the process of deciding a voice having the acquired voice section information and the voice source direction information as the voice recognition target. The voice is decided as the voice recognition target when any of the following conditions is satisfied:
(Condition 1) When a determination of step S406 is Yes, that is, when the voice source direction in which the voice section start position is detected coincides with the voice source direction in which the voice section end position is detected.

When the above condition (1) is satisfied, the voice source direction/voice section deciding unit 134 decides a voice having the acquired voice section information and the voice source direction information as the voice recognition target. The voice information decided in this decision process is output to the voice source extracting unit 135 of the voice processing unit 130 illustrated in Fig. 3, and then the voice source extraction process is performed. Further, the voice source extraction result is output to the voice recognizing unit 136, and then the voice recognition process is performed.

In the present embodiment, a setting of the voice recognition target is performed using the determination information as to whether the user is viewing a specific position. The user need not take a specific action or motion such as a posture or a gesture in order to cause determination of necessity of voice recognition to be performed, and thus the user's burden can be reduced.

(5. Configuration of performing face identification process)

In the above embodiments, the process is performed without considering who the utterer is. In other words, an utterer identification process of identifying, for example, (1) a person A's utterance, (2) a person B's utterance, or (3) a person C's utterance, that is, identifying who an utterer has not been performed.

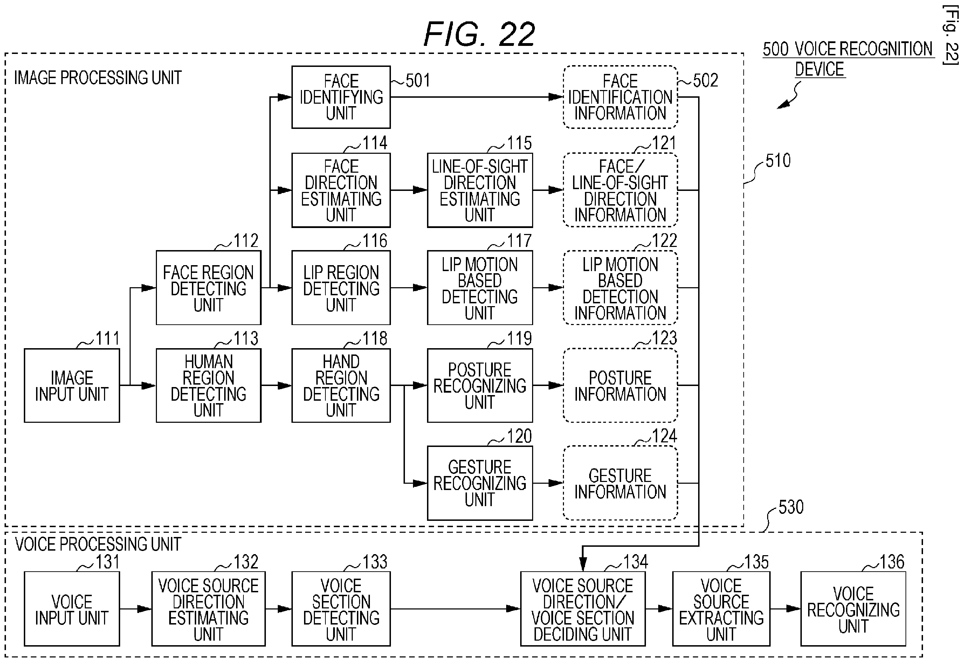

In each of the above embodiments, the face identification process may be added, and the process subsequent thereto may be changed using the face identification information. Fig. 22 illustrates an exemplary configuration of the voice recognition device that performs the face identification process.

A voice recognition device 500 illustrated in Fig. 22 includes an image processing unit 510 and a voice processing unit 530. The voice recognition device 500 of the present embodiment has almost the same configuration as the voice recognition device 10 described above with reference to Fig. 3 but is different from the voice recognition device 10 in that a face identifying unit 501 is disposed in the image processing unit 510. The remaining configurations are the same as the voice recognition device 10 illustrated in Fig. 3.

An image input from the image input unit 111 configured with a video camera or the like is output to the face region detecting unit 112, and the face region detecting unit 112 detects a face region from the input image. The face region information detected by the face region detecting unit is input to the face identifying unit 501 together with the captured image. The face identifying unit 501 determines a person who has the face present in the face region detected by the face region detecting unit 112.

The face pattern information which is registered in advance is stored in a memory accessible by the face identifying unit 501. The registration information is data in which an identifier of each user is registered in association with face feature information such as a face pattern. In other words, the face feature information of each user such as the face feature information of the person A, the face feature information of the person B, and the face feature information of the person C is stored in the memory.

The face identifying unit 501 compares a feature of the face present in the face region detected by the face region detecting unit 112 with the registered feature information of each user stored in the memory, and selects registered feature information having the highest similarity to the feature of the face present in the face region detected by the face region detecting unit 112. The user associated with the selected registered feature information is determined as the user having the face in the face region of the captured image, and user information of the user is output to the voice source direction/voice section deciding unit 134 as face identification information 502.

The voice source direction/voice section deciding unit 134 specifies the voice source direction and the voice section, and specifies the user who has given an utterance using the face identification information 502. Thereafter, it is determined whether the specified user gives an utterance during a previously set period of time, and only when the specified user gives an utterance, the utterance is selected as the voice recognition target. This process can be performed.

Alternatively, the user of the voice recognition target is registered to the voice recognition device 500 in advance. For example, only an utterance of a user A is set as the voice recognition target, utterances of the other users are registered in advance not to be set as the voice recognition target even when voice information thereof is acquired. In other words, an "utterance acceptable user" is registered to the memory.

The voice source direction/voice section deciding unit 134 determines whether each utterance in which the voice source direction and the voice section are decided is an utterance of the "utterance acceptable user" registered to the memory using the face identification information 502 generated by the face identifying unit 501. When the utterance is the utterance of the "utterance acceptable user," the process of the subsequent stage, that is, the voice recognition process is performed. When the utterance is not the utterance of the "utterance acceptable user," a setting in which voice recognition is not performed is made. In this setting, even under the circumstances in which many people talk, it is possible to perform the process of reliably selecting only an utterance of a specific user and narrowing down the voice recognition target data.

Further, priority levels of processes corresponding to a plurality of users may be set in advance, and processes may be performed according to a priority level. For example, process priority levels are registered to the memory in advance such that a process priority level of a user A is set to be high, a process priority level of a user B is set to be medium, and a process priority level of a user C is set to be low.

Under this setting, when a plurality of utterances to be set as the voice recognition target are detected, a setting is made such that a processing order is decided according to the priority level, and an utterance of a user having a high priority level is first processed.

(6. Other embodiments)

Next, a plurality of modified examples of the above embodiment will be described.

(6-1. Embodiment in which cloud type process is performed)

The above embodiment has been described in connection with the embodiment in which the voice recognition device 10 is attached to the television, and the voice recognizing unit of the television performs processing, for example, as described above with reference to Fig. 1.

However, for example, a configuration in which a device such as the television that needs the voice recognition is connected to a network, the voice recognition process is executed in a server connected via the network, and the execution result is transmitted to the device such as the television may be made.

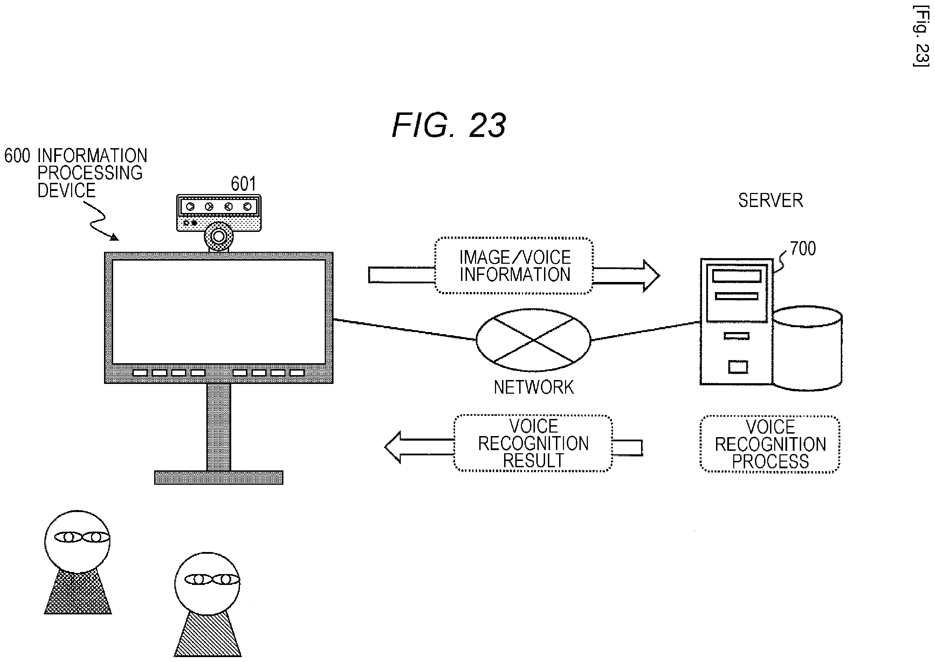

In other words, as illustrated in Fig. 23, a configuration in which an information processing apparatus 600 such as the television is connected with a server 700 via a network such as the Internet may be made. The information processing apparatus 600 such as the television includes an information input unit 601 including a camera and a microphone as described above with reference to Fig. 2.

Image and voice information acquired by the information input unit 601 are transmitted to the server 700 via a network. The server 700 performs voice recognition using information received via a network, and transmits the voice recognition result to the information processing apparatus 600. The information processing apparatus 600 performs a process according to the received voice recognition result such as a channel change process. As described above, a cloud type process configuration in which a data process is performed in a server may be made. In this case, the server 700 is set to have the configuration described above with reference to Fig. 2 or Fig. 23.

Through this configuration, the device such as the television at the user side need not mount hardware or software of performing the voice recognition process and can avoid an increase in the size of a device or the cost.

(6-2. Embodiment in which voice section detection process is performed based on operation of operating unit)

The above embodiment has been described in connection with the example in which the start position or the end position of the voice section is specified based on an input of the user to the voice recognition device through the input unit. However, for example, a configuration in which an input unit for inputting a start or an end of a voice section is disposed in a remote controller of the television, and the user (utterer) operates the input unit may be used.

For example, utterance start position information is input to the television serving as the voice recognition device by operating the input unit of the remote controller according to an utterance start timing. Alternatively, utterance end position information is input to the television serving as the voice recognition device by operating the input unit of the remote controller according to an utterance end timing. By using this process in combination with the above embodiment, the voice recognition process is performed with a high degree of accuracy.

Further, the start position or the end position of the voice section may be determined according to the process described in the above embodiment, and when operation information is input from the utterer through the input unit such as the remote controller within a period of time from the start position of the voice section to the end position thereof, a process of selecting a corresponding utterance as the voice recognition target may be performed. As this process is performed, a configuration in which voice recognition is performed only when there is an explicit request from the user can be provided.

(7.Improvement in voice recognition rate using image data)

As described above, the voice recognition device according to the present disclosure has a configuration in which the determination process of the voice source direction and the voice section is performed using image data as well as voice information. As the image data is used, voice recognition is performed with a high degree of accuracy.

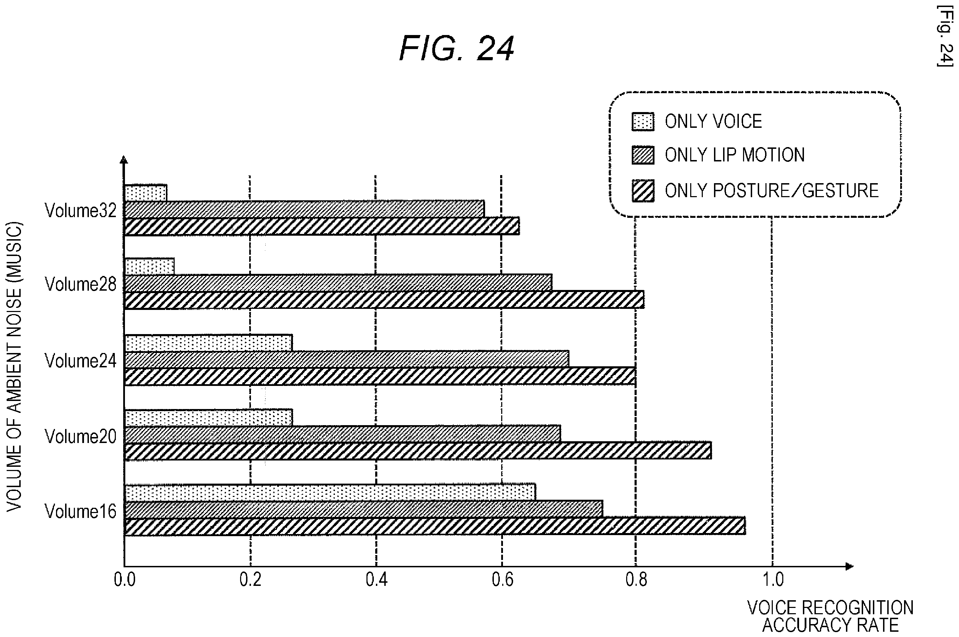

Fig. 24 illustrates experiment data when a voice recognition rate is improved using image data. In Fig. 24, a horizontal axis represents a voice recognition accuracy rate, and a vertical axis represents a graph illustrating a volume (volume level) of ambient noise. The voice recognition accuracy rate is in a range of 0.0 to 1.0, 0.0 represents the accuracy rate of 0%, and 1.0 represents the accuracy rate of 100%. The level of the ambient noise is set to a range of a volume 16 to 32. The volume 16 represents that a noise level is low, and the volume 32 represents that noise level is high.

Fig. 24 comparatively illustrates voice recognition accuracy rates when the following three types of detection processes of the voice source direction and the voice section are performed:

(a) a voice recognition process based on detection of a voice source direction and a voice section using only a voice;

(b) a voice recognition process based on detection of a voice source direction and a voice section using only a lip motion; and

(c) a voice recognition process based on detection of a voice source direction and a voice section using only a posture or a gesture.

In all volume levels of 16 to 32, (c) the process using a posture or a gesture is highest in the voice recognition accuracy rate, (b) the process using the lip motion is next highest in the voice recognition accuracy rate, and (a) the process using only a sound is lowest in the voice recognition accuracy rate.

Further, when an ambient noise level is high, the voice recognition accuracy rate extremely deteriorates when (c) only a voice is used, but in the configuration using (b) the lip motion or (c) the posture or the gesture, the voice recognition accuracy rate does not extremely deteriorate, and in any event, the voice recognition accuracy rate is maintained to be 0.5 or more.

As described above, as the voice source direction and the voice section are detected using (b) the lip motion or (c) the posture or the gesture, the accuracy of the voice recognition process can be increased under the noisy environment.

(8.Conclusion of configuration of present disclosure)

The exemplary embodiments of the present disclosure have been described in detail with reference to the specific embodiments. In other words, the present disclosure is disclosed through the exemplary forms and not interpreted in a limited way. The gist of the present disclosure is determined with reference to the appended claims set forth below.

Further, a series of processes described in this specification may be performed by software, hardware, or a combinational configuration of software and hardware. When a process is performed by software, a program recording a processing sequence may be installed and executed in a memory of a computer including dedicated hardware or a program may be installed and executed in a general-purpose computer capable of performing various kinds of processing. For example, a program may be recorded in a recording medium in advance. Instead of installing a program in a computer from a recording medium, a program may be received via a network such as a local area network (LAN) or the Internet and then installed in a recording medium such as a built-in hard disk.

Various kinds of processes described in this specification may be performed in time series as described above or may be performed in parallel or individually according to a processing capability of a device performing processing or according to the need. In this specification, a system means a logical aggregate configuration of a plurality of devices, and is not limited to a configuration in which devices of respective configurations are arranged in the same housing.

**Industrial Applicability**

According to an embodiment of the present disclosure, a high-accuracy voice recognition process is performed based on analysis of a voice source direction and a voice section.

Specifically, the voice recognition device according to the present disclosure includes an information input unit that receives image information and voice information and a voice source direction/voice section deciding unit that performs an analysis process on the input information of the information input unit and detects the voice source direction and the voice section.

The voice source direction/voice section deciding unit performs an acquisition process of acquiring a voice section start time and voice source direction information and an acquisition process of acquiring a voice section end time and voice source direction information through an analysis processes using different pieces of information. Further, a degree of coincidence of pieces of voice source direction information obtained by the analysis processes using the difference pieces of information is determined, and when the degree of coincidence is within a previously set permissible range, a process of deciding voice information of a voice section obtained by the analysis processes using the difference pieces of information as a voice recognition target is performed.

Through this configuration, a high-accuracy voice recognition process is implemented based on analysis of a voice source direction and a voice section.

In embodiments, the visual trigger events may be predetermined gestures and/or predetermined postures of a user captured by a camera, which allow a system to appropriately focus attention on a user to optimize the receipt of a voice command in a noisy environment. This may be accomplished in embodiments through the assistance of visual feedback complementing the voice feedback provided to the system by the user. Since the visual trigger events are predetermined gestures and/or postures, the system is able to distinguish which sounds produced by a user are voice commands and which sounds produced by the user is noise that in unrelated to the operation of the system.

In embodiments, the start point and/or the end point of the voice data signal detects a user command based from the voice data signal. For example, in embodiments, by the recognition of the start point and/or the voice data signal, a system may be able to determine the start and end of a user command, even in a noisy environment which could not adequately detect a voice command based only on audio signals.

In embodiments, the voice data signal is an acoustic signal originating from a user and the voice data signal is an electrical representation of the acoustic signal. For example, in embodiments, a voice recognition system will actually process the electrical representation of an audio signal, after it is the sounds are captured by a microphone and converted into an electrical signal.

In embodiments, the recognition of the visual trigger event is based on analysis of a visual data signal received from a user. The visual data signal may be a light signal originating from the physical presence of a user. The visual data signal may be an electrical representation of the optical signal.

In embodiments, the visual trigger event is determined based on both the visual data signal and the voice data signal. For example, in particularly noisy environments, for faster operation, and/or for the most effective operation, the visual trigger event will utilize both visual and audio data to determine the visual trigger event. However, in other embodiments, the visual trigger event is independent of any received audio signals.

In embodiments, the apparatus is a server. The visual data signal and/or the voice data signal may be detected from a user by one or more detection devices. The one or more detection devices may share visual data signal and/or the voice data signal by communicating through a computer network. Accordingly, in embodiments, aspects can be implemented by a remote server, which allows for flexible application of embodiments in different types of computing environments.

In embodiments, the visual trigger event is either a predetermined gesture or predetermined postures. Different embodiments relate to different combinations of predetermined gestures and predetermined postures to determine the start point and the end point of a voice command. For example, both the start and end points could be predetermined gestures. As another example, both the start and end points could be predetermined postures. In other embodiments, the start point could be a predetermined gesture and the end point a predetermined posture or visa versa.

Embodiments include one or more displays, video cameras, and/or microphones. The one or more video camera may be configured to detect the visual data signal. The one or more microphones are configured to detect the voice data signal. In embodiments, different configurations of displays, video cameras, and/or microphones allow communication of a voice command in a noisy environment.

In embodiments, a display may provide a visual indication to a user that at least one of the predetermined gesture and/or the predetermined posture of the user has been detected. Accordingly, in embodiments, a user may be able to more efficiently interface with a voice recognition system by receiving a visual warning on the display that their predetermined gesture or posture has been detected. Alternatively, in embodiments, the providing of a visual indication that a posture or gesture has been recognized, allows a user to recognize that an unintentional trigger event has occurred, so that erroneous voice commands can be avoided.

In embodiments, a predetermined gesture may be a calculated movement of a user intended by the user to be a deliberate user command. In embodiments, a predetermined posture may be a natural positioning of a user causing an automatic user command. In embodiments, a predetermined posture may be relatively easy to detect, since it involves the analysis of a series of static images. In embodiments, a predetermined gesture may provide a relatively large amount of information relating to the trigger event through the relational analysis of sequential data frames.

In embodiments, a calculated movement may include an intentional hand movement, an intentional facial movement, and/or an intentional body movement. The intentional hand movement may be a plurality of different deliberate hand commands each according to and associated with one of a plurality of deliberate hand symbols formed by different elements of a human hand. The intentional facial movement may be a plurality of different deliberate facial commands each according to and associated with one of a plurality of deliberate facial symbols formed by different elements of a human face. The intentional body movement may be a plurality of different deliberate body commands each according to and associated with one of a plurality of deliberate body symbols formed by different elements of a human body. Accordingly, in embodiments, a system may be able to utilize body language movements to assist in receiving voice commands.

In embodiments, the natural positioning may include a subconscious hand position by the user, a subconscious facial position by the user, and/or a subconscious body position by the user. In embodiments, the subconscious hand position may be a plurality of different automatic hand commands each according to and associated with one of a plurality of subconscious hand symbols formed by different elements of a human hand. In embodiments, the subconscious facial position may be an automatic facial command each according to and associated with one of a plurality of subconscious facial symbols formed by different elements of a human face. In embodiments, the subconscious body position may be an automatic body commands according to and associated with one of a plurality of subconscious body symbols formed by different elements of a human body. In embodiments, since a posture is static and may be a natural positioning, human interfacing with a computer using a voice command may be naturally implements, providing the user with a more efficient and comfortable ability to control a computer using their voice.

In embodiments, the visual trigger event is recognition of a facial recognition attribute, a position and movement of a user's hand elements, and/or position/ movement of a user's body elements. In embodiments, a voice recognition system may use attributes of ordinary human body language to assist in the receipt of a voice command in a noisy environment.

In embodiments, an apparatus may use feedback from a user profile database as part of the recognition of the visual trigger event. The user profile database may stores a predetermined personalized gesture and/or a predetermined personalized posture for each individual user among a plurality of users, in accordance with embodiments. In embodiments, the user profile database may include a prioritized ordering of said at least one predetermined gesture and said at least one predetermined posture for efficient recognition of the visual trigger event. In embodiments, use of personalized postures and gestures allows for more efficient and/or effective determinations of start and end points of a voice command.

## Reference Signs List

10 Voice recognition device
20 Information input unit
21 Camera
22 Microphone array
110 Image processing unit
111 Image input unit
112 Face region detecting unit
113 Human region detecting unit
114 Face direction estimating unit
115 Line-of-sight direction estimating unit
116 Lip region detecting unit
117 Lip motion based detecting unit
118 Hand region detecting unit
119 Posture recognizing unit
120 Gesture recognizing unit
121 Face/line-of-sight direction information
122 Lip motion based detection information
123 Posture information
124 Gesture information
130 Voice processing unit
131 Voice input unit
132 Voice source direction estimating unit
133 Voice section detecting unit
134 Voice source direction/voice section deciding unit
135 Voice source extracting unit
136 Voice recognizing unit
500 Voice recognition device
501 Face identifying unit
502 Face identification information
510 Image processing unit

530 Voice processing unit
600 Information processing apparatus
700 Server

**Claims**

**1.** An apparatus configured to:

receive a voice data signal; and
detect a start point in the voice data signal based on recognition of a predetermined gesture or a predetermined posture (S301) and an end point in the voice data signal based on recognition of a lip motion (S304),
**characterized in that**
the apparatus is further configured to
perform voice recognition on a voice section between the start point and the end point if a voice source direction at the end point and a voice source direction at the start point coincide with each other (S307, S309).

**2.** The apparatus of claim 1, wherein a user command is detected from the voice data signal based on at least one of the start point and the end point of the voice data signal.

**3.** The apparatus of claim 1 or 2, wherein at least one of:

the voice data signal is an acoustic signal originating from a user; and
the voice data signal is an electrical representation of the acoustic signal.

**4.** The apparatus of any one of claims 1 to 3, wherein the recognition of the predetermined posture or the predetermined gesture is based on analysis of a visual data signal received from a user.

**5.** The apparatus of claim 4, wherein at least one of:

the visual data signal is a light signal originating from the physical presence of a user; and
the visual data signal is an electrical representation of the light signal.

**6.** The apparatus of any one of claims 1 to 5,
wherein the predetermined gesture comprises a start gesture commanding the start point; and/or
wherein the predetermined posture comprises a start posture commanding the start point;.

**7.** The apparatus of any one of claims 1 to 6, comprising:

at least one display;
at least one video camera, wherein the at least one video camera is configured to detect the visual data signal; and
at least one microphone, wherein the at least one microphone is configured to detect the voice data signal.

**8.** The apparatus of claim 7,
wherein said at least one display displays a visual indication to a user that the predetermined gesture or the predetermined posture of the user has been detected, and/or
wherein said at least one microphone is a directional microphone array; and
directional attributes of the directional microphone array are directed at the user based on the visual data signal.

**9.** The apparatus of any one of claims 1 to 8, wherein:

the predetermined gesture is a calculated movement of a user intended by the user to be a deliberate user command; and
the predetermined posture is a natural positioning of a user causing an automatic user command.

**10.** The apparatus of claim 9, wherein the calculated movement comprises at least one of:

an intentional hand movement;

an intentional facial movement; and
an intentional body movement,

in particular, wherein at least one of:

the intentional hand movement comprises at least one of a plurality of different deliberate hand commands each according to and associated with one of a plurality of deliberate hand symbols formed by different elements of a human hand;
the intentional facial movement comprises at least one of a plurality of different deliberate facial commands each according to and associated with one of a plurality of deliberate facial symbols formed by different elements of a human face; and
the intentional body movement comprises at least one of a plurality of different deliberate body commands each according to and associated with one of a plurality of deliberate body symbols formed by different elements of a human body.

11. The apparatus of claim 9, wherein the natural positioning comprises at least one of:

a subconscious hand position by the user;
a subconscious facial position by the user; and
a subconscious body position by the user,

in particular, wherein at least one of:

the subconscious hand position comprises at least one of a plurality of different automatic hand commands each according to and associated with one of a plurality of subconscious hand symbols formed by different elements of a human hand;
the subconscious facial position comprises at least one of a plurality of different automatic facial commands each according to and associated with one of a plurality of subconscious facial symbols formed by different elements of a human face; and
the subconscious body position comprises at least one of a plurality of different automatic body commands each according to and associated with one of a plurality of subconscious body symbols formed by different elements of a human body.

12. The apparatus of any one of claims 1 to 11, wherein the recognition of predetermined posture or the predetermined gesture is recognition of at least one of:

at least one facial recognition attribute;
at least one of position and movement of a user's hand elements:

at least one of position and movement of a user's face elements;
at least one of position and movement of a user's face;
at least one of position and movement of a user's lips;
at least one of position and movement of a user's eyes; and
at least one of position and movement of a user's body elements.

13. The apparatus of any one of claims 1 to 12, wherein the apparatus is configured to use feedback from a user profile database as part of the recognition of the predetermined posture or the predetermined gesture,
in particular, wherein the user profile database stores at least one of a predetermined personalized gesture and a predetermined personalized posture for each individual user among a plurality of users.

14. A method comprising
receiving a voice data signal; and
detecting a start point in the voice data signal based on recognition of a predetermined gesture or a predetermined posture (S301)
and an end point in the voice data signal based on recognition of a lip motion (S304),
**characterized in that**
the method further comprises:
performing voice recognition on a voice section between the start point and the end point if a voice source direction at the end point and a voice source direction at the start point coincide with each other (S307, S309).

15. A non-transitory computer-readable medium having embodied thereon a program, which when executed by a processor of an apparatus causes the processor to perform a method, the method comprising:

receiving a voice data signal; and
detecting a start point in the voice data signal based on recognition of a predetermined gesture or a predetermined posture (S301)
and an end point in the voice data signal based on recognition of a lip motion (S304), **characterized in**
performing voice recognition on a voice section between the start point and the end point if a voice source direction at the end point and a voice source direction at the start point coincide with each other (S307, S309).

**Patentansprüche**

1. Vorrichtung, die konfiguriert ist zum:

Empfangen eines Sprachdatensignals; und
Erkennen eines Startpunkts in dem Sprachdatensignal aufgrund eines Erkennens einer vorbestimmten Geste oder einer vorbestimmten Haltung (S301) und eines Endpunkts in dem Sprachdatensignal aufgrund eines Erkennens einer Lippenbewegung (S304),
**dadurch gekennzeichnet, dass**
die Vorrichtung außerdem konfiguriert ist zum Ausführen einer Spracherkennung in einem Sprachabschnitt zwischen dem Startpunkt und dem Endpunkt, wenn eine Richtung der Sprachquelle an dem Endpunkt und eine Richtung der Sprachquelle an dem Startpunkt miteinander übereinstimmen (S307, S309).

2. Vorrichtung nach Anspruch 1, wobei ein Benutzerbefehl aus dem Sprachdatensignal aufgrund mindestens eines des Startpunkts und des Endpunkts des Sprachdatensignals erkannt wird.

3. Vorrichtung nach Anspruch 1 oder 2, wobei das Sprachdatensignal mindestens eines ist aus:

einem akustischen Signal, das von einem Benutzer stammt; und
einer elektrischen Darstellung des akustischen Signals.

4. Vorrichtung nach einem der Ansprüche 1 bis 3, wobei das Erkennen der vorbestimmten Haltung oder der vorbestimmten Geste auf einer Analyse eines optischen Datensignals beruht, das von dem Benutzer empfangen wird.

5. Vorrichtung nach Anspruch 4, wobei das optische Datensignal mindestens eines ist aus
einem Lichtsignal, das von der physischen Anwesenheit eines Benutzers stammt; und
einer elektrischen Darstellung des Lichtsignals.

6. Vorrichtung nach einem der Ansprüche 1 bis 5, wobei die vorbestimmte Geste eine Startgeste umfasst, die den Startpunkt festlegt; und/oder wobei die vorbestimmte Haltung eine Starthaltung umfasst, die den Startpunkt festlegt.

7. Vorrichtung nach einem der Ansprüche 1 bis 6, umfassend:

mindestens einen Bildschirm;
mindestens eine Videokamera, wobei die mindestens eine Videokamera konfiguriert ist, um das optische Datensignal zu erkennen; und
mindestens ein Mikrofon, wobei das mindestens eine Mikrofon konfiguriert ist, um das Sprachdatensignal zu erkennen.

8. Vorrichtung nach Anspruch 7,
wobei der mindestens eine Bildschirm eine optische Anzeige für einen Benutzer anzeigt, dass die vorbestimmte Geste oder die vorbestimmte Haltung des Benutzers erkannt wurde, und/oder
wobei das mindestens eine Mikrofon eine Richtmikrofonanordnung ist; und
wobei die Richtcharakteristiken der Richtmikrofonanordnung aufgrund des optischen Datensignals auf den Benutzer gerichtet ist.

9. Vorrichtung nach einem der Ansprüche 1 bis 8, wobei:

die vorbestimmte Geste eine kalkulierte Bewegung eines Benutzers ist, die von dem Benutzer als ein gewollter Benutzerbefehl vorgesehen ist; und
die vorbestimmte Haltung eine natürliche Positionierung des Benutzers ist, die einen automatischen Benutzerbefehl verursacht.

10. Vorrichtung nach Anspruch 9, wobei die kalkulierte Bewegung mindestens eine ist aus:

einer beabsichtigten Handbewegung;
einer beabsichtigten Gesichtsbewegung; und
einer beabsichtigten Körperbewegung;

wobei insbesondere mindestens eine:

der beabsichtigten Handbewegungen mindestens eine aus einer Vielzahl von verschiedenen gewollten Handbefehlen gemäß und zugehörig zu einer Vielzahl von gewollten Handsymbolen umfasst, die durch verschiedene Elemente einer menschlichen Hand gebildet werden;
der beabsichtigten Gesichtsbewegungen mindestens eine aus einer Vielzahl von verschiedenen gewollten Gesichtsbefehlen gemäß und zugehörig zu einer Vielzahl von gewollten Gesichtssymbolen umfasst, die durch verschiedene Elemente eines menschlichen Gesichts gebildet werden; und
der beabsichtigten Körperbewegungen mindestens eine aus einer Vielzahl von verschiedenen gewollten Körperbefehlen gemäß und zugehörig zu einer Vielzahl von gewollten Körpersymbolen umfasst, die durch verschiedene Elemente eines menschlichen Körpers gebildet werden.

11. Vorrichtung nach Anspruch 9, wobei die natürliche Positionierung mindestens eine umfasst aus:

einer unbewussten Handposition des Benutzers;
einer unbewussten Gesichtsposition des Benutzers;
einer unbewussten Körperposition des Benutzers;
wobei insbesondere mindestens eine:

der unbewussten Handpositionen mindestens eine aus einer Vielzahl von verschiedenen automatischen Handbefehlen gemäß und zugehörig zu einer Vielzahl von unbewussten Handsymbolen umfasst, die durch verschiedene Elemente einer menschlichen Hand gebildet werden;
der unbewussten Gesichtsbewegungen mindestens eine aus einer Vielzahl von verschiedenen automatischen Gesichtsbefehlen gemäß und zugehörig zu einer Vielzahl von unbewussten Gesichtssymbolen umfasst, die durch verschiedene Elemente eines menschlichen Gesichts gebildet werden; und
der unbewussten Körperbewegungen mindestens eine aus einer Vielzahl von verschiedenen automatischen Körperbefehlen gemäß und zugehörig zu einer Vielzahl von unbewussten Körpersymbolen umfasst, die durch verschiedene Elemente eines menschlichen Körpers gebildet werden.

12. Vorrichtung nach einem der Ansprüche 1 bis 11, wobei das Erkennen der vorbestimmten Haltung oder der vorbestimmten Geste ein Erkennen von mindestens einem ist aus:

mindestens einem Gesichtserkennungsattribut;
mindestens Einer aus einer Position und einer Bewegung der Handelemente eines Benutzers;
mindestens Einer aus einer Position und einer Bewegung der Gesichtselemente eines Benutzers;
mindestens Einer aus einer Position und einer Bewegung des Gesichts eines Benutzers mindestens Einer aus einer Position und einer Bewegung der Lippen eines Benutzers;
mindestens Einer aus einer Position und einer Bewegung der Augen eines Benutzers; und
mindestens Einer aus einer Position und einer Bewegung der Körperelemente eines Benutzers.

13. Vorrichtung nach einem der Ansprüche 1 bis 12, wobei die Vorrichtung konfiguriert ist, um Rückmeldungen aus einer Benutzerprofildatenbank als Teil des Erkennens der vorbestimmten Haltung oder der vorbestimmten Geste zu verwenden,
wobei insbesondere die Benutzerprofildatenbank mindestens eine aus einer vorbestimmten personalisierten Geste und einer vorbestimmten personalisierten Haltung für jeden individuellen Benutzer aus einer Vielzahl von Benutzern speichert.

**14.** Verfahren, umfassend:

Empfangen eines Sprachdatensignals; und
Erkennen eines Startpunkts in dem Sprachdatensignal aufgrund eines Erkennens einer vorbestimmten Geste oder einer vorbestimmten Haltung (S301) und eines Endpunkts in dem Sprachdatensignal aufgrund eines Erkennens einer Lippenbewegung (S304),
**dadurch gekennzeichnet, dass**
das Verfahren außerdem umfasst:
Ausführen einer Spracherkennung in einem Sprachabschnitt zwischen dem Startpunkt und dem Endpunkt, wenn eine Richtung der Sprachquelle an dem Endpunkt und eine Richtung der Sprachquelle an dem Startpunkt miteinander übereinstimmen (S307, S309).

**15.** Nichtflüchtiges computerlesbares Medium, auf dem ein Programm enthalten ist, das, wenn es von einem Prozessor einer Vorrichtung ausgeführt wird, den Prozessor veranlasst, ein Verfahren auszuführen, wobei das Verfahren umfasst:

Empfangen eines Sprachdatensignals; und
Erkennen eines Startpunkts in dem Sprachdatensignal aufgrund eines Erkennens einer vorbestimmten Geste oder einer vorbestimmten Haltung (S301) und eines Endpunkts in dem Sprachdatensignal aufgrund eines Erkennens einer Lippenbewegung (S304),
**gekennzeichnet durch**:
Ausführen einer Spracherkennung in einem Sprachabschnitt zwischen dem Startpunkt und dem Endpunkt, wenn eine Richtung der Sprachquelle an dem Endpunkt und eine Richtung der Sprachquelle an dem Startpunkt miteinander übereinstimmen (S307, S309).

**Revendications**

**1.** Appareil configuré pour :

recevoir un signal de données vocales ; et
détecter un point de départ dans le signal de données vocales sur la base de la reconnaissance d'un geste prédéterminé ou d'une posture prédéterminée (S301), et un point de fin dans le signal de données vocales sur la base de la reconnaissance d'un mouvement de lèvre (S304) ;
**caractérisé en ce que**
l'appareil est en outre configuré pour :
réaliser une reconnaissance vocale sur une section vocale entre le point de départ et le point de fin si une direction de source vocale au niveau du point de fin et une direction de source vocale au niveau du point de départ coïncident l'une avec l'autre (S307, S309).

**2.** Appareil selon la revendication 1, une commande d'utilisateur étant détectée à partir du signal de données vocales sur la base d'au moins l'un du point de départ et du point de fin du signal de données vocales.

**3.** Appareil selon la revendication 1 ou 2, au moins l'un parmi :

le signal de données vocales étant un signal acoustique provenant d'un utilisateur ; et
le signal de données vocales étant une représentation électrique du signal acoustique.

**4.** Appareil selon l'une quelconque des revendications 1 à 3, la reconnaissance de la posture prédéterminée ou du geste prédéterminé étant basée sur l'analyse d'un signal de données visuelles reçu d'un utilisateur.

**5.** Appareil selon la revendication 4, au moins l'un parmi :

le signal de données visuelles étant un signal lumineux provenant de la présence physique d'un utilisateur ; et
le signal de données visuelles étant une représentation électrique du signal lumineux.

6. Appareil selon l'une quelconque des revendications 1 à 5,
le geste prédéterminé comprenant un geste de départ commandant le point de départ ; et/ou la posture prédéterminée comprenant une posture de départ commandant le point de départ.

7. Appareil selon l'une quelconque des revendications 1 à 6 comprenant :

   au moins un dispositif d'affichage ;
   au moins une caméra vidéo, la ou les caméras vidéo étant configurées pour détecter le signal de données visuelles ; et
   au moins un microphone, le ou les microphones étant configurés pour détecter le signal de données vocales.

8. Appareil selon la revendication 7,
ledit au moins un dispositif d'affichage affichant une indication visuelle à un utilisateur que le geste prédéterminé ou la posture prédéterminée de l'utilisateur a été détecté, et/ou
ledit au moins un microphone étant un réseau de microphones directionnels ; et
des attributs directionnels du réseau de microphones directionnels étant dirigés vers l'utilisateur sur la base du signal de données visuelles.

9. Appareil selon l'une quelconque des revendications 1 à 8,
le geste prédéterminé étant un mouvement calculé d'un utilisateur destiné par l'utilisateur pour être une commande d'utilisateur délibérée ; et
la posture prédéterminée étant un positionnement naturel d'un utilisateur provoquant une commande d'utilisateur automatique.

10. Appareil selon la revendication 9, le mouvement calculé comprenant au moins l'un des éléments suivants :

    un mouvement de la main intentionnel ;
    un mouvement du visage intentionnel ; et
    un mouvement de corps intentionnel ;
    en particulier, au moins l'un parmi :

        le mouvement manuel intentionnel comprenant au moins l'une d'une pluralité de différentes commandes manuelles délibérées, chacune en fonction de et associée à l'un d'une pluralité de symboles de main délibérés formés par différents éléments d'une main humaine ;
        le mouvement du visage intentionnel comprenant au moins l'une d'une pluralité de différentes commandes du visage délibérées, chacune en fonction de et associée à l'un d'une pluralité de symboles du visage délibérés formés par différents éléments d'un visage humain ; et
        le mouvement de corps intentionnel comprenant au moins l'une d'une pluralité de différentes commandes de corps délibérées, chacune en fonction de et associée à l'un d'une pluralité de symboles de corps délibérés formés par différents éléments d'un corps humain.

11. Appareil selon la revendication 9, le positionnement naturel comprenant au moins l'un des éléments suivants :

    une position de main inconsciente par l'utilisateur ;
    une position du visage inconsciente par l'utilisateur ; et
    une position de corps inconsciente par l'utilisateur ;
    en particulier, au moins l'un parmi :

        la position de main inconsciente comprenant au moins l'une d'une pluralité de différentes commandes de main automatiques, chacune en fonction de et associée à l'un d'une pluralité de symboles de main inconscients formés par différents éléments d'une main humaine ;
        la position du visage inconsciente comprenant au moins l'une d'une pluralité de différentes commandes du visage automatiques, chacune en fonction de et associée à l'un d'une pluralité de symboles du visage inconscients formés par différents éléments d'un visage humain ; et
        la position de corps inconsciente comprenant au moins l'une d'une pluralité de différentes commandes de corps automatique, chacune en fonction de et associée à l'un d'une pluralité de symboles de corps inconscients formés par différents éléments d'un corps humain.

**12.** Appareil selon l'une quelconque des revendications 1 à 11, la reconnaissance d'une posture prédéterminée ou du geste prédéterminé étant la reconnaissance d'au moins un élément parmi :

au moins un attribut de reconnaissance du visage ;
au moins l'une de la position et du mouvement des éléments de main d'un utilisateur ;
au moins l'une de la position et du mouvement des éléments de visage d'un utilisateur ;
au moins l'une de la position et du mouvement du visage d'un utilisateur ;
au moins l'une de la position et du mouvement des lèvres d'un utilisateur ;
au moins l'une de la position et du mouvement des yeux d'un utilisateur ; et
au moins l'une de la position et du mouvement des éléments du corps d'un utilisateur.

**13.** Appareil selon l'une quelconque des revendications 1 à 12, l'appareil étant configuré pour utiliser une rétroaction à partir d'une base de données de profils d'utilisateurs en tant que partie de la reconnaissance de la posture prédéterminée ou du geste prédéterminé,

en particulier, la base de données de profils d'utilisateurs stockant au moins un élément parmi un geste personnalisé prédéterminé et une posture personnalisée prédéterminée pour chaque utilisateur individuel parmi une pluralité d'utilisateurs.

**14.** Procédé comprenant

la réception d'un signal de données vocales ; et la détection d'un point de départ dans le signal de données vocales sur la base de la reconnaissance d'un geste prédéterminé ou d'une posture prédéterminée (S301), et d'un point de fin dans le signal de données vocales sur la base de la reconnaissance d'un mouvement de lèvre (S304),
**caractérisé en ce que**
le procédé comprend en outre :
la réalisation d'une reconnaissance vocale sur une section vocale entre le point de départ et le point de fin si une direction de source vocale au point de fin et une direction de source vocale au point de départ coïncident l'une avec l'autre (S307, S309).

**15.** Support lisible par ordinateur non transitoire sur lequel est incorporé un programme, qui, lorsqu'il est exécuté par un processeur d'un appareil, amène le processeur à mettre en oeuvre un procédé, le procédé comprenant :

la réception d'un signal de données vocales ; et
la détection d'un point de départ dans le signal de données vocales sur la base de la reconnaissance d'un geste prédéterminé ou d'une posture prédéterminée (S301), et d'un point de fin dans le signal de données vocales sur la base de la reconnaissance d'un mouvement de lèvre (S304),
**caractérisé en ce que**
la réalisation d'une reconnaissance vocale sur une section vocale entre le point de départ et le point de fin si une direction de source vocale au niveau du point de fin et une direction de source vocale au point de départ coïncident l'une avec l'autre (S307, S309).

[Fig. 1]

# FIG. 1

20 INFORMATION INPUT UNIT

10 VOICE RECOGNITION DEVICE

31

32

33

34

EP 2 956 940 B1

[Fig. 2]

EP 2 956 940 B1

*FIG. 2*

20 INFORMATION
INPUT UNIT

22 MICROPHONE ARRAY
(4 CHANNELS)

21 CAMERA

FIG. 3

[Fig. 4]

EP 2 956 940 B1

# FIG. 4

201
MICROPHONE ARRAY

t0

t1

t2

t3

t4

202
VOICE SOURCE

MICROPHONE 1

MICROPHONE 2

203

MICROPHONE 3

θ

MICROPHONE 4

t5

t6

t7

204
VOICE SOURCE DIRECTION θ

[Fig. 5]

*FIG. 5*

| | |
|---|---|
| VOICE SOURCE DIRECTION ($\theta$) | 0.40 radian |
| VOICE SECTION (START TIME) | 5.34 sec |
| VOICE SECTION (END TIME) | 6.80 sec |

EP 2 956 940 B1

[Fig. 6]

# FIG. 6

START VOICE RECOGNITION PROCESS USING ONLY INFORMATION OBTAINED FROM VOICE

DETECT VOICE SOURCE DIRECTION AND VOICE SECTION FROM VOICE INFORMATION

S101 ESTIMATE VOICE SOURCE DIRECTION

S102 DETECT VOICE SECTION

S103 EXTRACT VOICE SOURCE WAVEFORM

S104 RECOGNIZE VOICE

END

## FIG. 7

### (a) EXAMPLE IN WHICH FACE DIRECTION IS FRONT DIRECTION

TELEVISION

CAMERA  LINE-OF-SIGHT DIRECTION

IMAGE CAPTURED BY CAMERA

( DIAGRAM IN WHICH TELEVISION AND USER ARE VIEWED FROM TOP )

### (b) EXAMPLE IN WHICH FACE DIRECTION IS SIDE DIRECTION

TELEVISION

CAMERA

LINE-OF-SIGHT DIRECTION

IMAGE CAPTURED BY CAMERA

( DIAGRAM IN WHICH TELEVISION AND USER ARE VIEWED FROM TOP )

EP 2 956 940 B1

[Fig. 7]

## FIG. 8

MOTION EXAMPLE OF DETECTING VOICE SECTION BASED
ON RECOGNITION RESULT OF POSTURE OR GESTURE

(t1)  (t2)  (t3)  (t4)

(t1)  (t2)  (t3)  (t4)

TIME

(a) POSTURE EXAMPLE 1 — ◎ SHOW "PAPER" WITH HAND

(b) GESTURE EXAMPLE 1 — ◎ RAISING HAND

(c) UTTERANCE SECTION — "HI"

EP 2 956 940 B1

[Fig. 9]

*FIG. 9*

MOTION EXAMPLE OF DETECTING VOICE SECTION BASED ON RECOGNITION RESULT OF POSTURE OR GESTURE

(t1)  (t2)  (t3)  (t4)

(a) POSTURE EXAMPLE 2 — SHOW "PAPER" WITH HAND — CLOSE "PAPER"

(b) GESTURE EXAMPLE 2 — RAISING HAND — LOWERING HAND

(c) UTTERANCE SECTION — "HI"

TIME

[Fig. 10]

## FIG. 10

MOTION EXAMPLE OF DETECTING VOICE SECTION BASED
ON RECOGNITION RESULT OF POSTURE OR GESTURE

(t1)　　　　　(t2)　　　　　(t3)　　　　　(t4)

(t1)　　　　　(t2)　　　　　(t3)　　　　　(t4)

TIME

(a) POSTURE
EXAMPLE 3
◎
SHOW "PAPER" WITH HAND

(b) GESTURE
EXAMPLE 3
◎
RAISING HAND

(c) UTTERANCE
SECTION
"HI"

EP 2 956 940 B1

## FIG. 11

(1) TYPE OF INFORMATION USED FOR DETECTION OF VOICE SECTION

|  | TYPE OF ACQUIRED INFORMATION |
|---|---|
| (A) | POSTURE OR GESTURE INFORMATION |
| (B) | LIP MOTION INFORMATION |
| (C) | VOICE INFORMATION |

(2) COMBINATION (SET) EXAMPLE OF INFORMATION
USED FOR DETECTION OF VOICE SECTION

|  |  | VOICE SECTION START | VOICE SECTION END |
|---|---|---|---|
| COMBINATION OF INFORMATION USED FOR DETECTION OF VOICE SECTION | (SET 1) | A | B |
|  | (SET 2) | A | C |
|  | (SET 3) | B | C |

EP 2 956 940 B1

## FIG. 12

[Fig. 12]

EP 2 956 940 B1

START VOICE RECOGNITION PROCESS USING
VOICE INFORMATION AND IMAGE INFORMATION

~S201
DETECT VOICE SOURCE
DIRECTION AND VOICE SECTION
FROM VOICE INFORMATION

~S202
DETECT VOICE SOURCE DIRECTION
AND VOICE SECTION FROM
POSTURE RECOGNITION RESULT
OR GESTURE RECOGNITION RESULT

~S203
DETECT VOICE SOURCE
DIRECTION AND VOICE SECTION
FROM LIP MOTION

~S204
ESTIMATE FACE
DIRECTION OR
LINE-OF-SIGHT DIRECTION

S205
HAVE VOICE
SOURCE DIRECTION AND VOICE
SECTION (EITHER START OR END) BEEN
DETECTED?

No

DETECT VOICE SOURCE
DIRECTION AND VOICE
SECTION FROM
IMAGE INFORMATION

Yes

~S206
DECIDE VOICE SOURCE DIRECTION AND VOICE SECTION WHICH ARE ACTUALLY
SUBJECTED TO VOICE RECOGNITION IN VIEW OF INFORMATION USED FOR DETECTION

S207
HAVE VOICE
SOURCE DIRECTION AND VOICE SECTION
BEEN DECIDED?

No

Yes

END

[Fig. 13]

# FIG. 13

CAPTURED IMAGE a

$\begin{pmatrix} \text{DIAGRAM IN WHICH TELEVISION} \\ \text{AND USER ARE VIEWED FROM TOP} \end{pmatrix}$

TELEVISION

(a)

CAPTURED IMAGE b

(b)

INFORMATION INPUT UNIT
(MICROPHONE ARRAY AND CAMERA)

(c)

CAPTURED IMAGE c

[Fig. 14]

## FIG. 14

START FIRST DECISION PROCESS
OF DECIDING VOICE SOURCE
DIRECTION AND VOICE SECTION

S301
IS DETECTION VOICE SECTION
INFORMATION DETECTION INFORMATION
OBTAINED BASED ON RECOGNITION
RESULT OF POSTURE OR GESTURE? — No →

Yes

S302
IS VOICE SECTION START TIME
INCLUDED IN DETECTION VOICE
SECTION INFORMATION? — No →

Yes

S303
HOLD VOICE SECTION START TIME
INFORMATION DETECTED BASED ON
RECOGNITION RESULT OF POSTURE
OR GESTURE AND VOICE SOURCE
DIRECTION INFORMATION IN MEMORY
AS DETECTION INFORMATION A

S304
IS DETECTION VOICE SECTION
INFORMATION DETECTION INFORMATION
OBTAINED BASED ON RECOGNITION
RESULT OF LIP MOTION? — No →

Yes

S305
IS DETECTION VOICE SECTION
INFORMATION DETECTION INFORMATION
OBTAINED BASED ON VOICE INFORMATION? — No →

Yes

S306
IS VOICE SECTION END TIME INCLUDED
IN DETECTION VOICE SECTION INFORMATION
AND IS DETECTION INFORMATION A
ALREADY STORED IN MEMORY? — No →

Yes

S307
DOES VOICE SOURCE DIRECTION
INFORMATION INCLUDED IN DETECTION
INFORMATION FROM WHICH VOICE SECTION END
TIME IS ACQUIRED COINCIDE WITH VOICE SOURCE
DIRECTION INFORMATION IN DETECTION
INFORMATION A STORED IN MEMORY? — Yes →

No

S308
IS FACE DIRECTION OR
LINE-OF-SIGHT DIRECTION WITHIN
PREDETERMINED SPECIFIED RANGE? — No →

Yes

S309
DECIDE ACQUIRED VOICE SECTION INFORMATION
AND VOICE SOURCE DIRECTION INFORMATION
AS VOICE RECOGNITION APPLYING INFORMATION

END

FIG. 15

(a) EXAMPLE IN WHICH FACE DIRECTION IS WITHIN SPECIFIED RANGE

SPECIFIED RANGE

( DIAGRAM IN WHICH TELEVISION AND USER ARE VIEWED FROM TOP )

( EXAMPLE OF IMAGE CAPTURED BY CAMERA )

(b) EXAMPLE IN WHICH FACE DIRECTION IS OUT OF SPECIFIED RANGE

SPECIFIED RANGE

( DIAGRAM IN WHICH TELEVISION AND USER ARE VIEWED FROM TOP )

( EXAMPLE OF IMAGE CAPTURED BY CAMERA )

[Fig. 15]

EP 2 956 940 B1

[Fig. 16]

## FIG. 16

**(a)** EXAMPLE IN WHICH FACE DIRECTION IS WITHIN SPECIFIED RANGE

SPECIFIED RANGE

( DIAGRAM IN WHICH TELEVISION
AND USER ARE VIEWED SIDEWAYS )

( EXAMPLE OF IMAGE
CAPTURED BY CAMERA )

**(b)** EXAMPLE IN WHICH FACE DIRECTION IS OUT OF SPECIFIED RANGE

SPECIFIED RANGE

( DIAGRAM IN WHICH TELEVISION
AND USER ARE VIEWED SIDEWAYS )

( EXAMPLE OF IMAGE
CAPTURED BY CAMERA )

EP 2 956 940 B1

[Fig. 17]

## FIG. 17

```
┌─────────────────────────────────┐
│  START SECOND DECISION PROCESS  │
│    OF DECIDING VOICE SOURCE     │
│  DIRECTION AND VOICE SECTION    │
└─────────────────────────────────┘
```

**S401** — IS DETECTION VOICE SECTION INFORMATION DETECTION INFORMATION OBTAINED BASED ON RECOGNITION RESULT OF LIP MOTION? — No

Yes

**S402** — IS VOICE SECTION START TIME INCLUDED IN DETECTION VOICE SECTION INFORMATION? — No

Yes

**S403** — HOLD VOICE SECTION START TIME INFORMATION DETECTED BASED ON RECOGNITION RESULT OF LIP MOTION AND VOICE SOURCE DIRECTION INFORMATION IN MEMORY AS DETECTION INFORMATION B

**S404** — IS DETECTION VOICE SECTION INFORMATION DETECTION INFORMATION OBTAINED BASED ON VOICE INFORMATION? — No

Yes

**S405** — IS VOICE SECTION END TIME INCLUDED IN DETECTION VOICE SECTION INFORMATION AND IS DETECTION INFORMATION B ALREADY STORED IN MEMORY? — No

Yes

**S406** — DOES VOICE SOURCE DIRECTION INFORMATION INCLUDED IN DETECTION INFORMATION FROM WHICH VOICE SECTION END TIME IS ACQUIRED COINCIDE WITH VOICE SOURCE DIRECTION INFORMATION IN DETECTION INFORMATION B STORED IN MEMORY? — Yes

No

**S407** — IS FACE DIRECTION OR LINE-OF-SIGHT DIRECTION WITHIN PREDETERMINED SPECIFIED RANGE? — No

Yes

**S408** — DECIDE ACQUIRED VOICE SECTION INFORMATION AND VOICE SOURCE DIRECTION INFORMATION AS VOICE RECOGNITION APPLYING INFORMATION

```
┌─────────┐
│   END   │
└─────────┘
```

EP 2 956 940 B1

[Fig. 18]

# FIG. 18

10 VOICE RECOGNITION
DEVICE

301 SPECIFIC
POSITION

EP 2 956 940 B1

# FIG. 19

(a) EXAMPLE IN WHICH USER IS VIEWING SPECIFIC POSITION

SPECIFIC POSITION RANGE

(a1. DIAGRAM IN WHICH TELEVISION AND USER ARE VIEWED SIDEWAYS)

SPECIFIC POSITION RANGE

(a2. DIAGRAM IN WHICH TELEVISION AND USER ARE VIEWED FROM TOP)

(a3. EXAMPLE IMAGE CAPTURED BY CAMERA)

EP 2 956 940 B1

[Fig. 19]

[Fig. 20]

## FIG. 20

```
                    ┌──────────────────────────────────────┐
                    │ START VOICE RECOGNITION PROCESS USING │
                    │ VOICE INFORMATION AND IMAGE INFORMATION│
                    └──────────────────────────────────────┘
                                     │
```

| ~S501 | ~S502 | ~S503 | ~S504 |
|---|---|---|---|
| DETECT VOICE SOURCE DIRECTION AND VOICE SECTION FROM VOICE INFORMATION | DETECT VOICE SOURCE DIRECTION AND VOICE SECTION FROM POSTURE RECOGNITION RESULT OR GESTURE RECOGNITION RESULT | DETECT VOICE SOURCE DIRECTION AND VOICE SECTION FROM LIP MOTION | ESTIMATE FACE DIRECTION OR LINE-OF-SIGHT DIRECTION |

S508 — IS USER VIEWING SPECIFIC POSITION AND HAVE VOICE SOURCE DIRECTION AND VOICE SECTION (EITHER START OR END) BEEN DETECTED? — No

Yes

S509 — DECIDE VOICE SOURCE DIRECTION AND VOICE SECTION WHICH ARE ACTUALLY SUBJECTED TO VOICE RECOGNITION

S510 — HAVE VOICE SOURCE DIRECTION AND VOICE SECTION BEEN DECIDED? — No

Yes

END

S505 — IS USER VIEWING SPECIFIC POSITION?

Yes → S506 — GIVE NOTIFICATION REPRESENTING THAT VOICE RECOGNITION IS POSSIBLE

No → S507 — GIVE NOTIFICATION REPRESENTING THAT IT IS DIFFICULT TO PERFORM VOICE RECOGNITION

EP 2 956 940 B1

59

[Fig. 21]

## FIG. 21

START THIRD DECISION PROCESS OF DECIDING VOICE SOURCE DIRECTION AND VOICE SECTION

IS DETECTION VOICE SECTION INFORMATION DETECTION INFORMATION OBTAINED BASED ON RECOGNITION RESULT OF LIP MOTION? — S601 — No

Yes

ARE VOICE SECTION START TIME AND VOICE SECTION END TIME INCLUDED IN DETECTION VOICE SECTION INFORMATION? — S602 — Yes

No

IS VOICE SECTION START TIME INCLUDED IN DETECTION VOICE SECTION INFORMATION? — S603 — No

Yes

HOLD VOICE SECTION START TIME INFORMATION DETECTED BASED ON RECOGNITION RESULT OF LIP MOTION AND VOICE SOURCE DIRECTION INFORMATION IN MEMORY AS DETECTION INFORMATION C — S604

IS DETECTION VOICE SECTION INFORMATION DETECTION INFORMATION OBTAINED BASED ON VOICE INFORMATION? — S605 — No

Yes

IS VOICE SECTION END TIME INCLUDED IN DETECTION VOICE SECTION INFORMATION AND IS DETECTION INFORMATION C ALREADY STORED IN MEMORY? — S606 — No

Yes

DOES VOICE SOURCE DIRECTION INFORMATION INCLUDED IN DETECTION INFORMATION FROM WHICH VOICE SECTION END TIME IS ACQUIRED COINCIDE WITH VOICE SOURCE DIRECTION INFORMATION IN DETECTION INFORMATION C STORED IN MEMORY? — S607 — No

Yes

DECIDE ACQUIRED VOICE SECTION INFORMATION AND VOICE SOURCE DIRECTION INFORMATION AS VOICE RECOGNITION APPLYING INFORMATION — S608

END

EP 2 956 940 B1

[Fig. 22]

## FIG. 22

EP 2 956 940 B1

[Fig. 23]

EP 2 956 940 B1

*FIG. 23*

[Fig. 24]

FIG. 24

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013025501 A
- JP 2012003326 A
- US 6351222 B1
- US 20110257971 A1
- JP 2006072163 A